# EUROPEAN PATENT APPLICATION

(11) **EP 4 783 023 A1**
(43) Date of publication of application: **29.07.2026**
(21) Application number: 24894005.8
(22) Date of filing: 07.11.2024
(51) Int. Cl.: G06F 16/182, G06F 16/903, G06Q 50/10, G06Q 50/40

(54) **SERVER DEVICE, INFORMATION PROCESSING METHOD, AND PROGRAM**

(30) Priority: 20.11.2023 JP 2023196883
(71) Applicant: Panasonic Intellectual Property Management Co., Ltd., Kadoma-shi, Osaka 571-0057 (JP)
(72) Inventor: IKEDA, Kotaro, Kadoma-shi, Osaka 571-0057 (JP); MATSUMOTO, Masaharu, Kadoma-shi, Osaka 571-0057 (JP)
(74) Representative: Eisenführ Speiser
(86) International application number: PCT/JP2024/039556
(87) International publication number: WO 2025/110013

(57) **Abstract**

A server device (110) is a server device provided in an aircraft (1), and includes: a processor (111) and a non-transitory first recording medium (113) that stores data. The processor (111) receives an inquiry from a terminal device in the aircraft (1), and determines whether a response can be made to the inquiry by using the data recorded in the first recording medium (113). When determining that the response cannot be made, the processor (111) accesses a resource provided external to the server device (110), generates response information by using the resource, and transmits the response information to the terminal device to make the response.

## Description

### [Technical Field]

The present disclosure relates to a server device and the like provided to an aircraft.

### [Background Art]

Conventionally, an inquiry response system has been proposed which receives inquiries and provides responses to the inquiries through chat and the like (for example, see Patent Literature (PTL) 1). The inquiry response system includes a response server device and a plurality of terminal devices. By repeated transmissions of messages and inquiries between the response server device and the terminal devices, responses to the inquiries are transmitted from the response server device to the terminal devices. In the inquiry response system, responses based on the attributes of the users of the terminal devices are provided to the terminal devices.

### [Citation List]

### [Patent Literature]

[PTL 1] Japanese Unexamined Patent Application Publication No. 2021-009587

### [Summary of Invention]

### [Technical Problem]

However, the response server device according to PTL 1 may not be able to provide a response to an inquiry made from a terminal device depending on the content of the inquiry. For example, when the inquiry response system according to PTL 1 is applied to the in-flight entertainment (IFE) system on an aircraft, it is difficult to obtain appropriate responses tailored to the various situations about the aircraft.

In view of the above, the present disclosure provides a server device and the like capable of increasing the likelihood that appropriate responses will be provided to inquiries.

### [Solution to Problem]

A server device according to one aspect of the present disclosure is a server device provided in an aircraft. The server device includes: a processor; and a first recording medium that is non-transitory and stores data, in which the processor: receives an inquiry from a terminal device provided in the aircraft; determines whether a response can be made to the inquiry by using the data recorded in the first recording medium; accesses a resource provided external to the server device, when the processor determines that the response cannot be made; and generates response information by using the resource and transmits the response information to the terminal device to make the response.

General and specific aspects disclosed above may be implemented using a system, a method, an integrated circuit, a computer program, a computer-readable recording medium such as a CD-ROM, or any combination of systems, methods, integrated circuits, computer programs, or recording media. The recording medium may be a non-transitory recording medium.

### [Advantageous Effects of Invention]

The server device according to the present disclosure is capable of increasing the likelihood that appropriate responses will be provided to inquiries.

Additional benefits and advantages according to one aspect of the present disclosure will become apparent from the description and drawings. The benefits and/or advantages may be obtained by various embodiments and features of the description and drawings, which need not all be provided.

### [Brief Description of Drawings]

[FIG. 1]

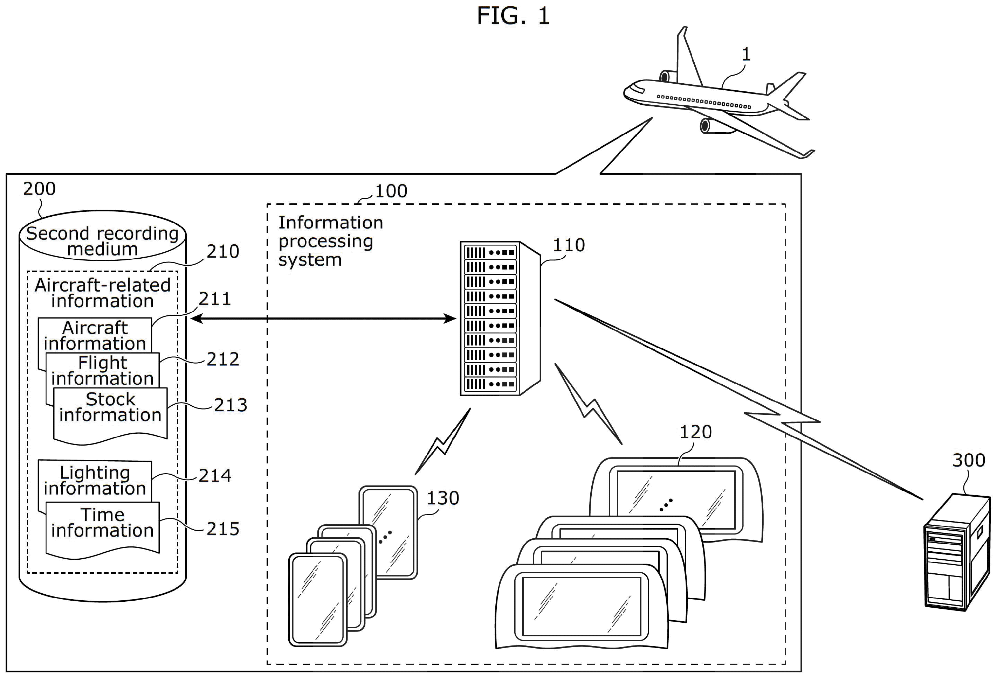

   FIG. 1 is an overall configuration diagram of an information processing system according to an embodiment.
[FIG. 2]

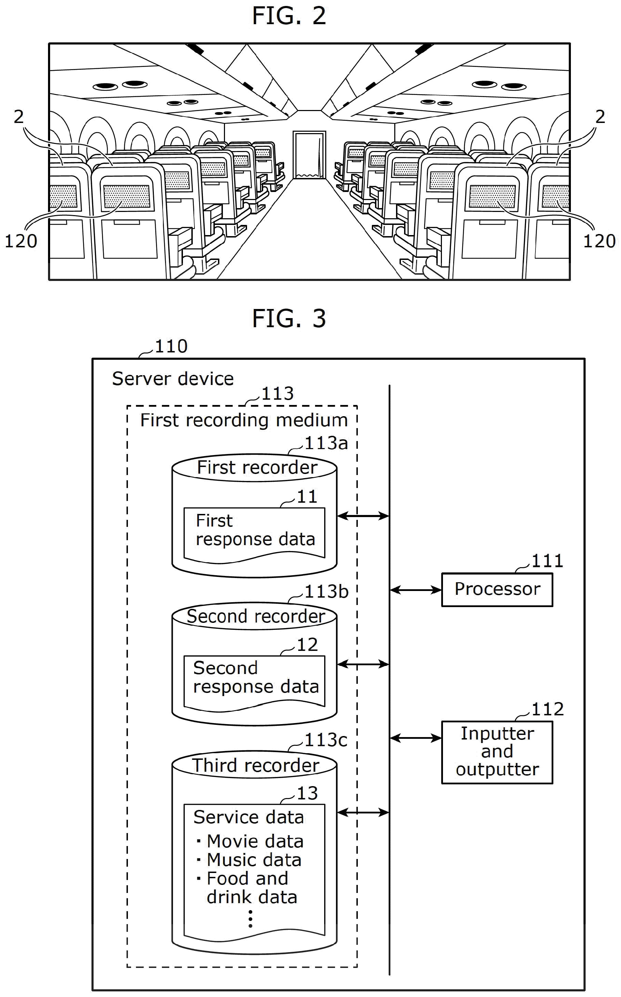

   FIG. 2 illustrates an example of a configuration of an arrangement of a plurality of passenger terminals according to the embodiment.
[FIG. 3]
   FIG. 3 illustrates a block diagram of an example of a configuration of a server device according to the embodiment.
[FIG. 4]

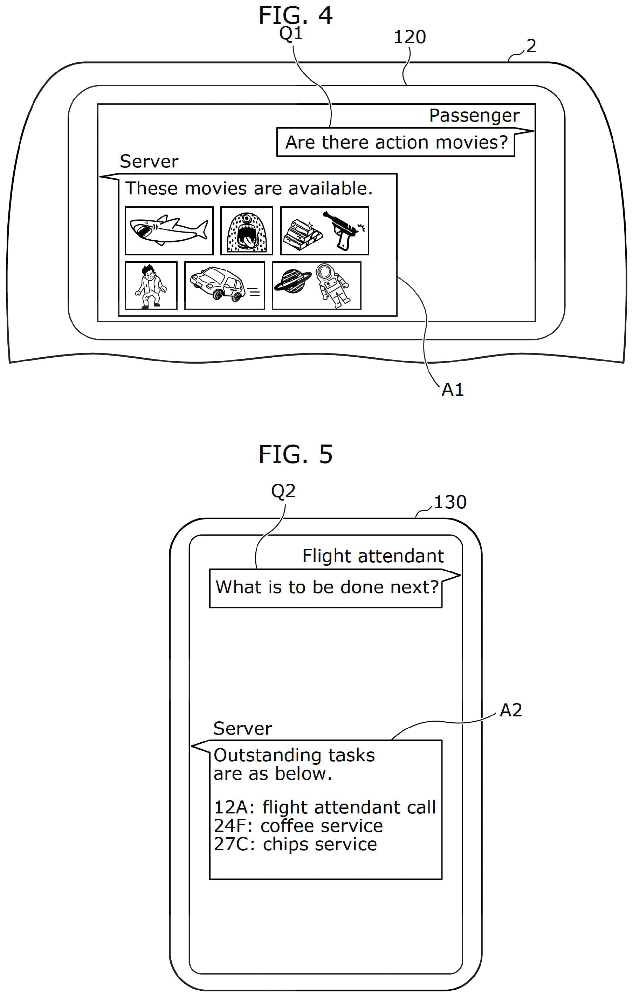

   FIG. 4 illustrates an example of an inquiry and a response to the inquiry displayed on a passenger terminal according to the embodiment.
[FIG. 5]
   FIG. 5 illustrates an example of an inquiry and a response to the inquiry displayed on a flight attendant terminal according to the embodiment.
[FIG. 6]

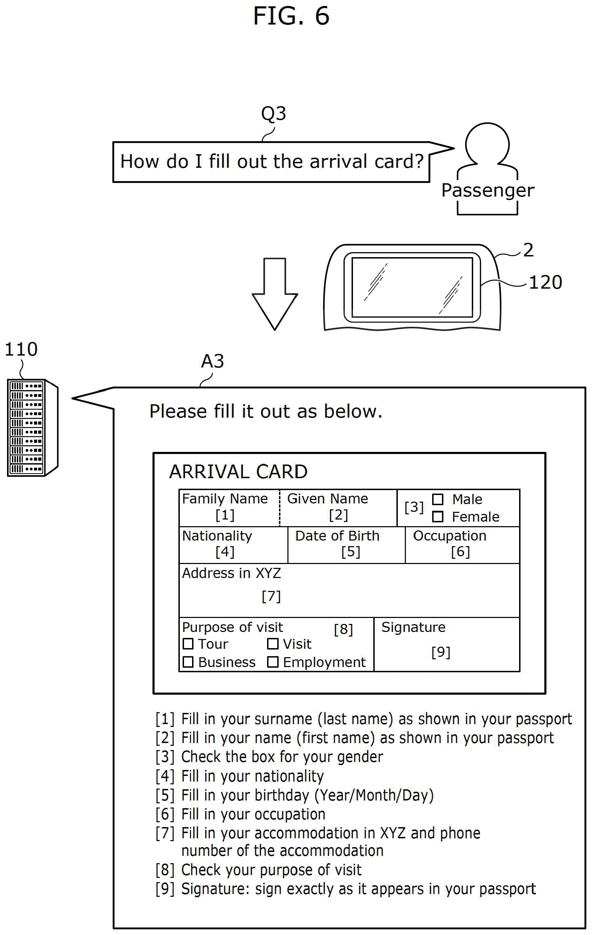

   FIG. 6 illustrates an example of an inquiry made using a passenger terminal and a response from the server device according to the embodiment.
[FIG. 7]

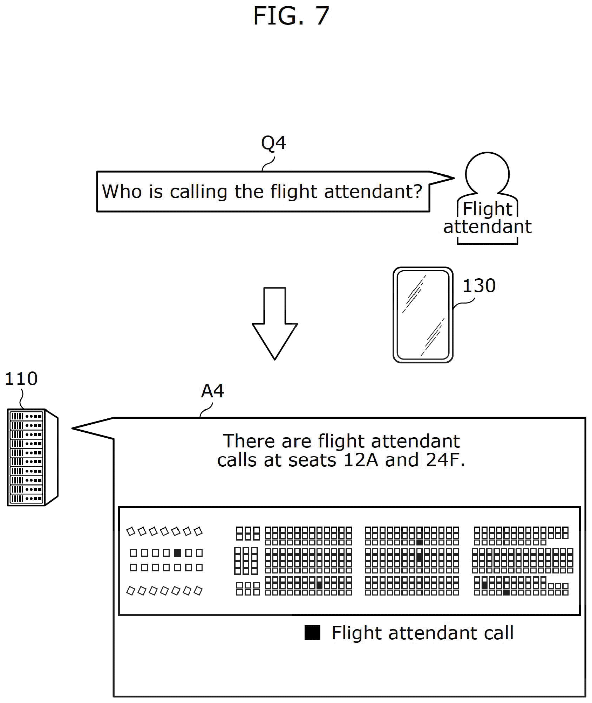

   FIG. 7 illustrates an example of an inquiry made using a flight attendant terminal and a response from the server device according to the embodiment.
[FIG. 8]

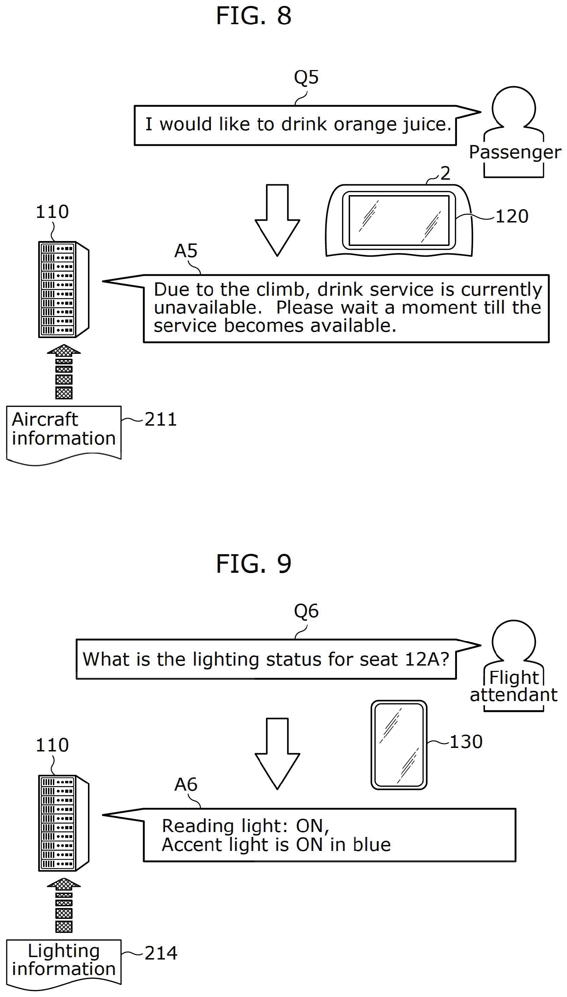

   FIG. 8 illustrates an example of an inquiry made using a passenger terminal and a response made using aircraft information from the server device according to the embodiment.
[FIG. 9]
   FIG. 9 illustrates an example of an inquiry made using a flight attendant terminal and a response made using lighting information from the server device according to the embodiment.
[FIG. 10]

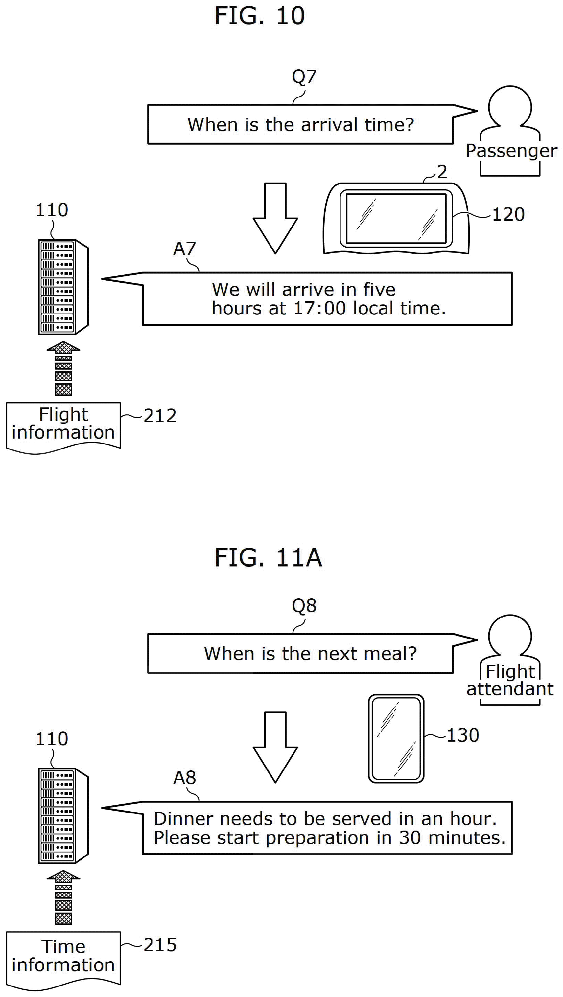

   FIG. 10 illustrates an example of an inquiry made using a passenger terminal and a response made using flight information from the server device according to the embodiment.
[FIG. 11A]
   FIG. 11A illustrates an example of an inquiry made using a flight attendant terminal and a response made using time information from the server device according to the embodiment.
[FIG. 11B]

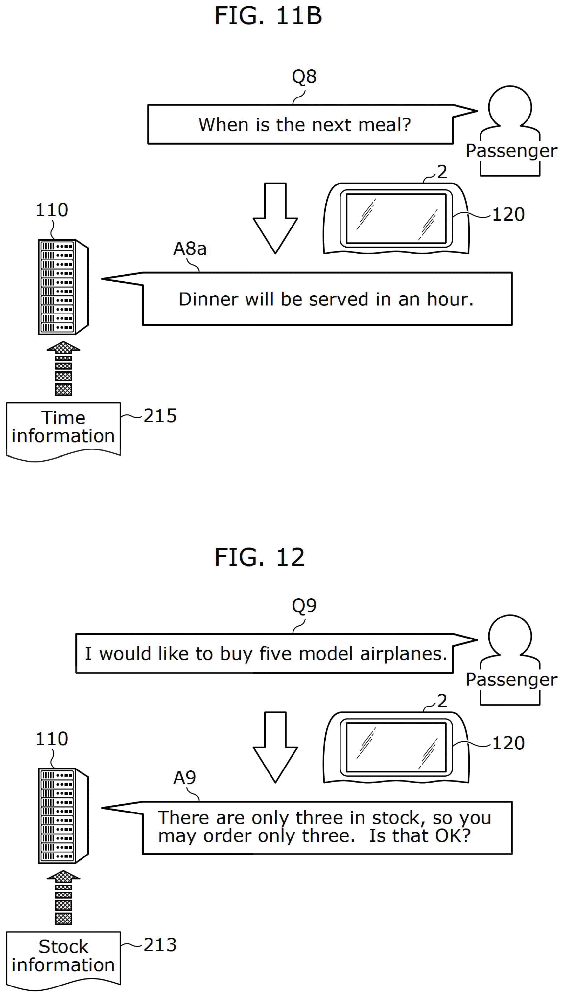

   FIG. 11B illustrates an example of an inquiry made using a passenger terminal and a response made using time information from the server device according to the embodiment.
[FIG. 12]
   FIG. 12 illustrates an example of an inquiry made using a passenger terminal and a response made using stock information from the server device according to the embodiment.
[FIG. 13]

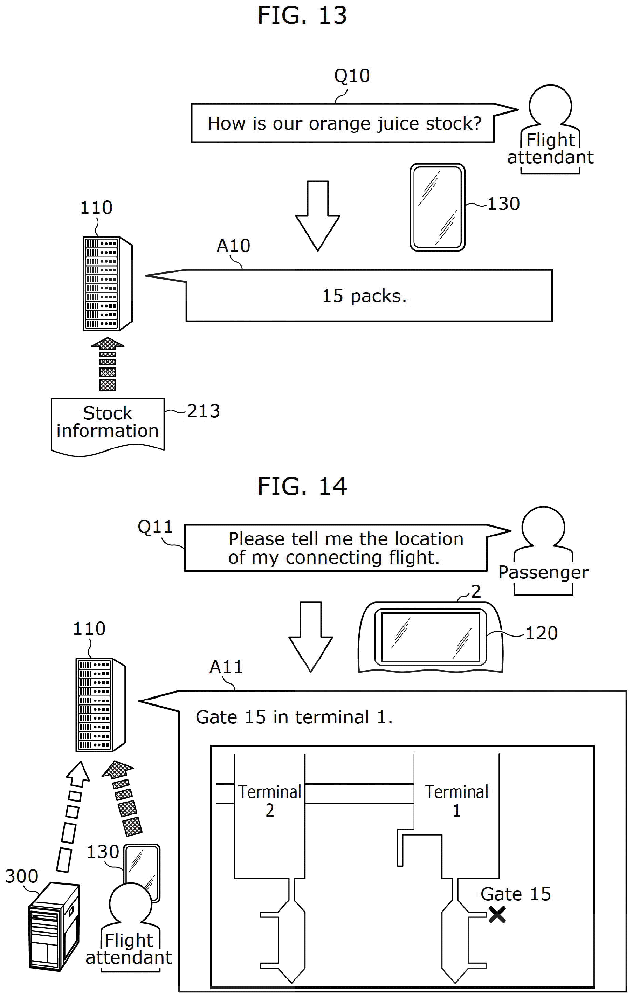

   FIG. 13 illustrates an example of an inquiry made using a flight attendant terminal and a response made using stock information from the server device according to the embodiment.
[FIG. 14]
   FIG. 14 illustrates an example of an inquiry made using a passenger terminal and a response from the server device using response support according to the embodiment.
[FIG. 15]

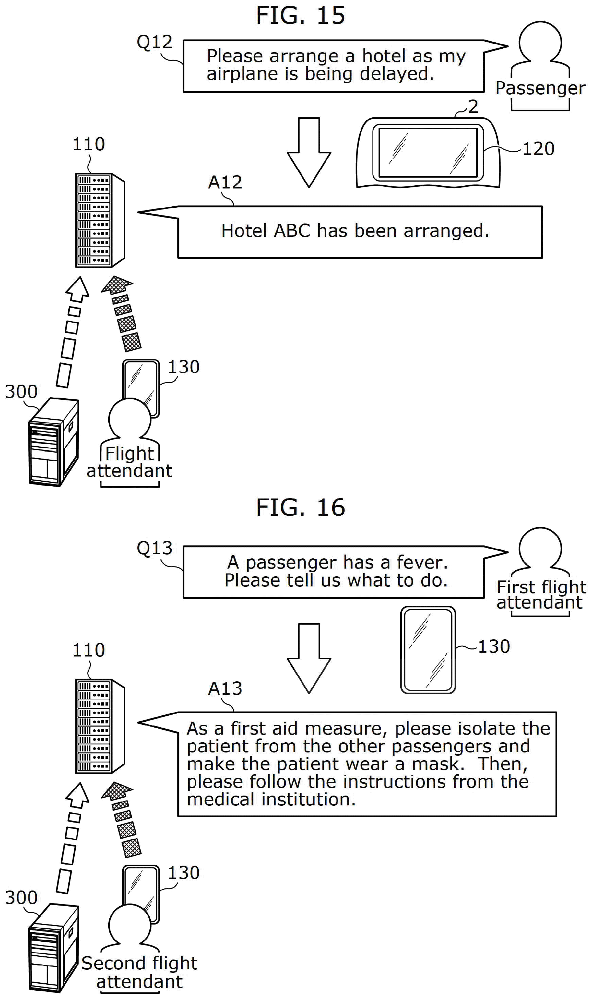

   FIG. 15 illustrates another example of an inquiry made using a passenger terminal and a response from the server device using response support according to the embodiment.
[FIG. 16]
   FIG. 16 illustrates another example of an inquiry made using a flight attendant terminal and a response from the server device using response support according to the embodiment.
[FIG. 17]

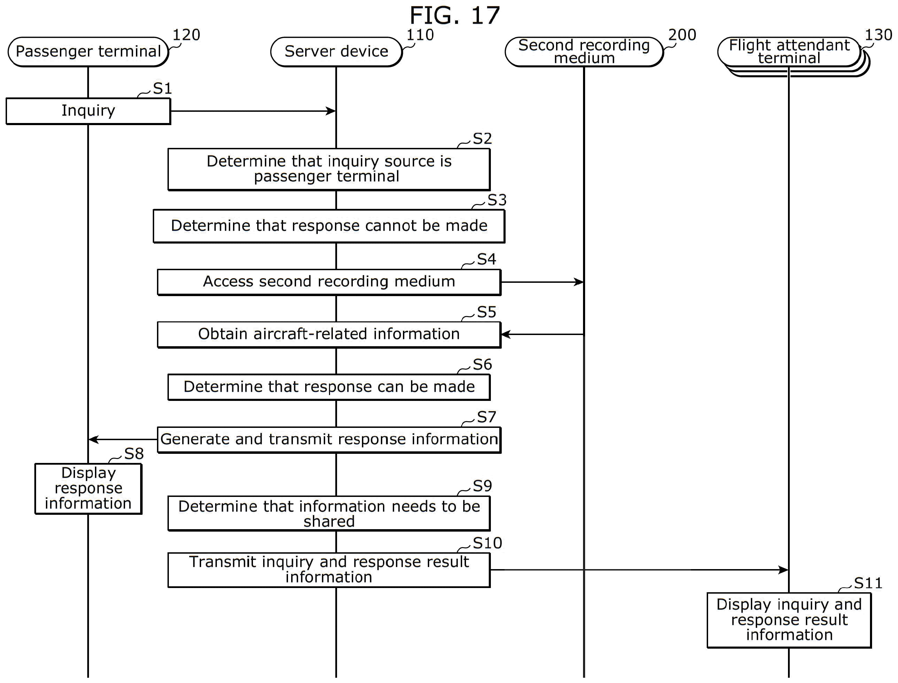

   FIG. 17 is a sequence diagram illustrating an example of processing performed by an information processing system until a response is provided to an inquiry made from a passenger terminal according to the embodiment.
[FIG. 18]

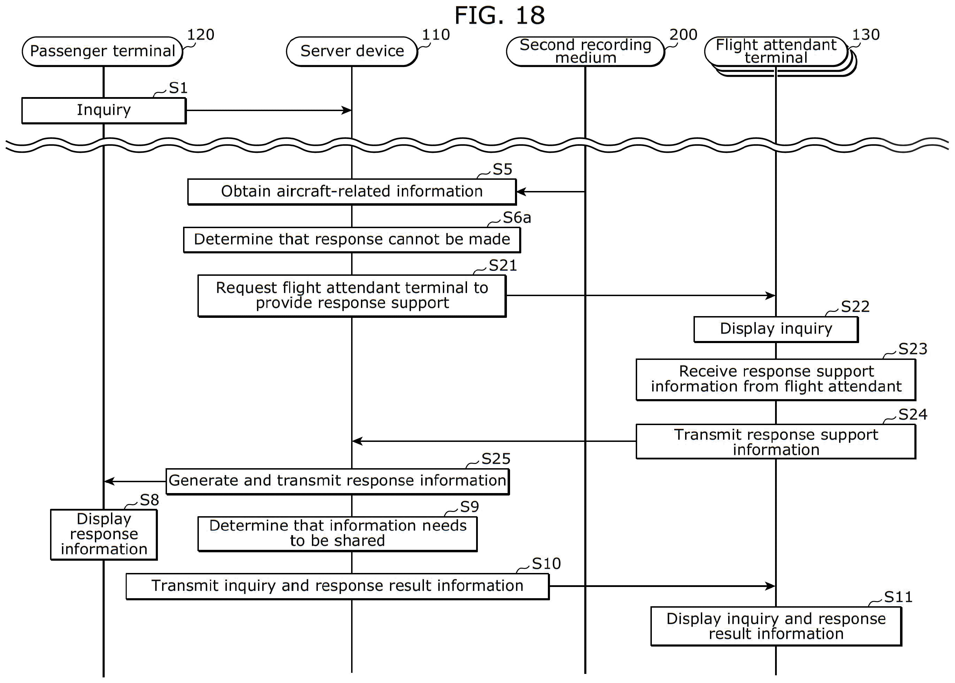

   FIG. 18 is a sequence diagram illustrating another example of processing performed by the information processing system until a response is provided to an inquiry made from a passenger terminal according to the embodiment.
[FIG. 19]

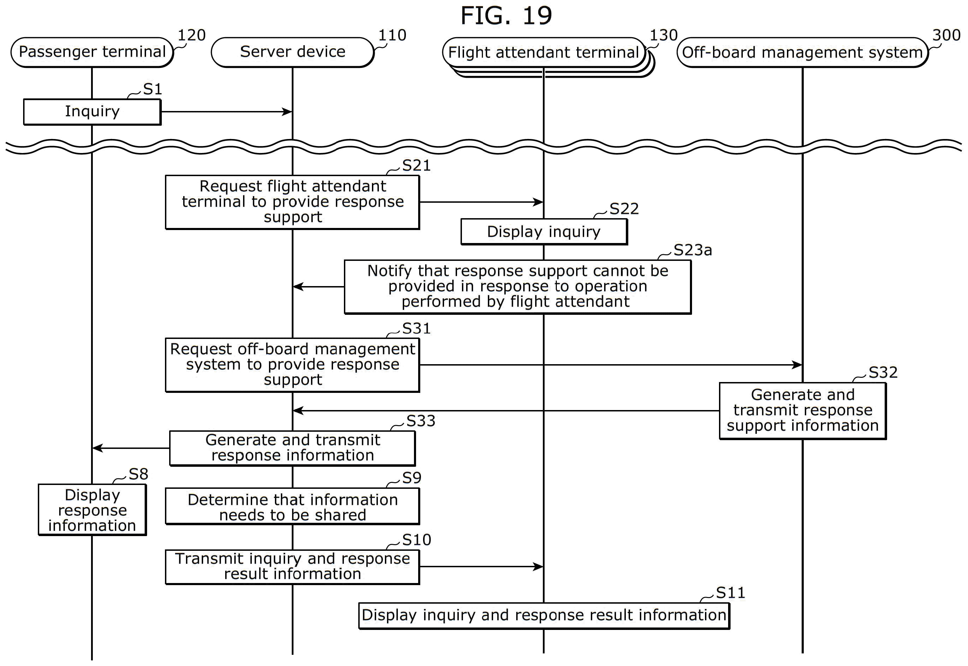

   FIG. 19 is a sequence diagram illustrating another example of processing performed by the information processing system until a response is provided to an inquiry made from a passenger terminal according to the embodiment.
[FIG. 20]

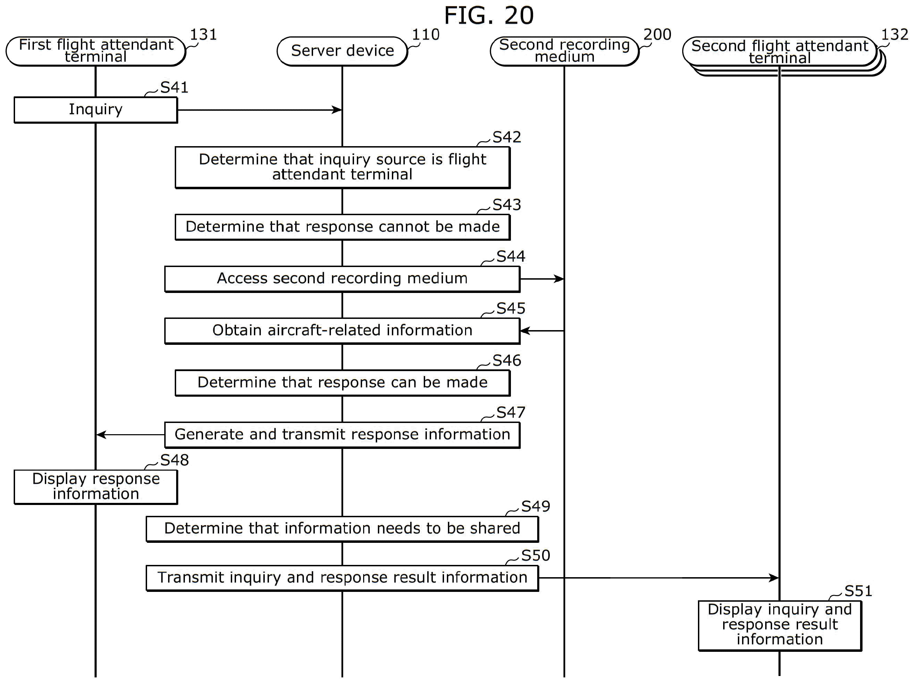

   FIG. 20 is a sequence diagram illustrating an example of processing performed by the information processing system until a response is provided to an inquiry made from a flight attendant terminal according to the embodiment.
[FIG. 21]

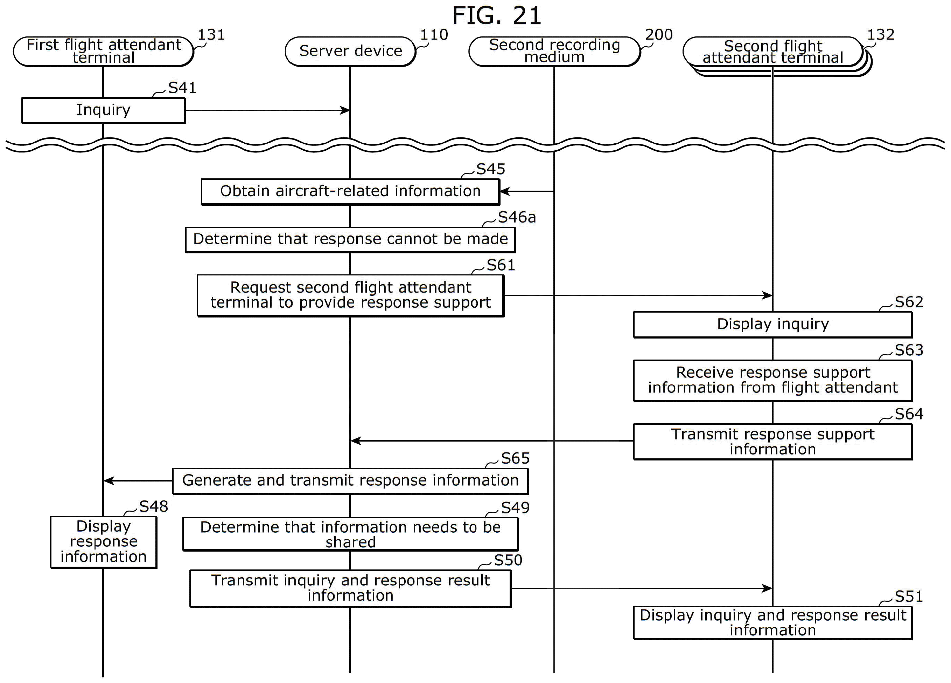

   FIG. 21 is a sequence diagram illustrating another example of processing performed by the information processing system until a response is provided to an inquiry made from a flight attendant terminal according to the embodiment.
[FIG. 22]

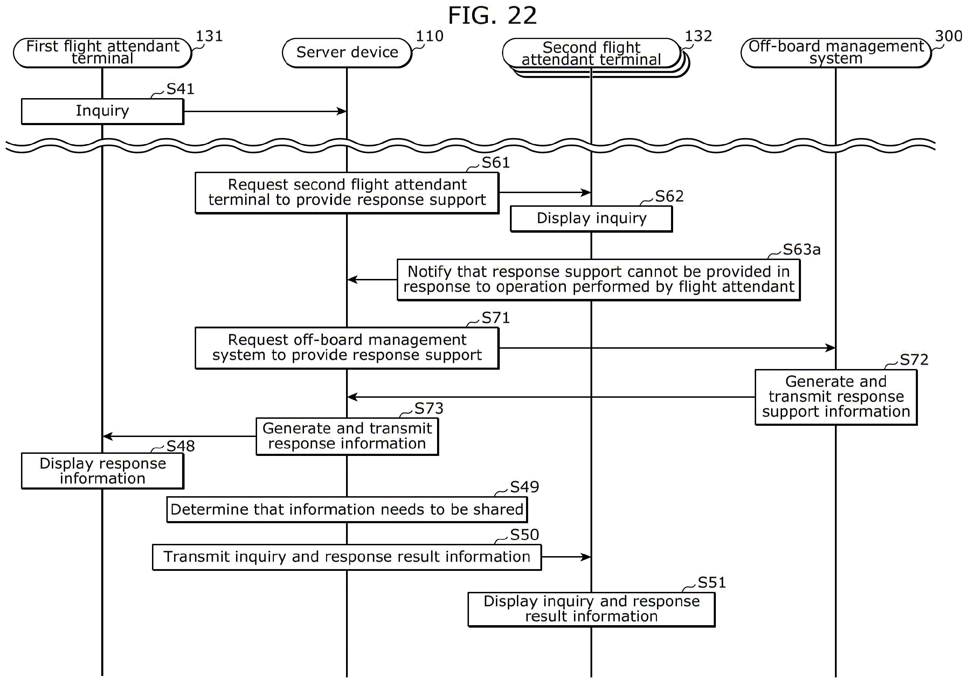

   FIG. 22 is a sequence diagram illustrating another example of processing performed by the information processing system until a response is provided to an inquiry made from a flight attendant terminal according to the embodiment.
[FIG. 23]

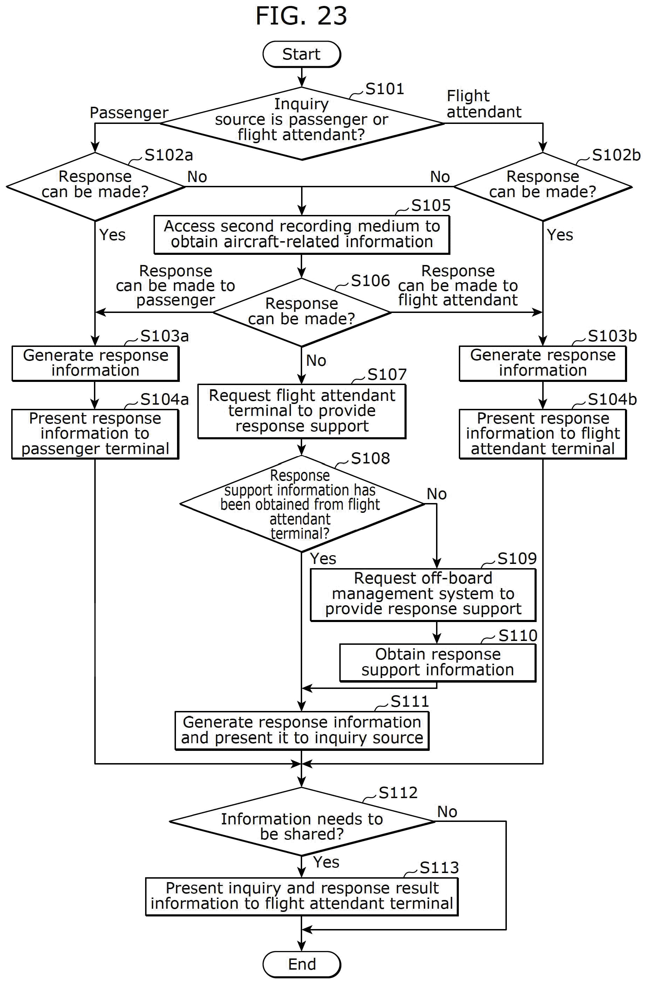

   FIG. 23 is a flowchart of an example of processing performed by the server device according to the embodiment.

### [Description of Embodiment]

A server device according to a first aspect of the present disclosure is a server device provided in an aircraft. The server device includes: a processor; and a first recording medium that is non-transitory and stores data, in which the processor: receives an inquiry from a terminal device provided in the aircraft; determines whether a response can be made to the inquiry by using the data recorded in the first recording medium; accesses a resource provided external to the server device, when the processor determines that the response cannot be made; and generates response information by using the resource and transmits the response information to the terminal device to make the response.

With this, even when a response cannot be made to an inquiry by using the data in the first recording medium included in the server device, a response can be made to the inquiry by using a resource provided external to the server device. Accordingly, it is possible to increase the likelihood that appropriate responses will be provided to inquiries for various situations about the aircraft.

Moreover, in the server device according to a second aspect, it may be that, in the aircraft, each of a plurality of terminal devices is used as the terminal device, when the processor receives the inquiry from an inquiry source that is one of the plurality of terminal devices, the processor further determines whether the inquiry source is a passenger terminal or a flight attendant terminal, the passenger terminal is one of the plurality of terminal devices that is used by a passenger of the aircraft, the flight attendant terminal is one of the plurality of terminal devices that is used by a flight attendant of the aircraft, and in determination of whether the response can be made, the processor: determines, when the inquiry source is the passenger terminal, whether a response tailored to the passenger corresponding to the passenger terminal can be made, and determines, when the inquiry source is the flight attendant terminal, whether a response tailored to the flight attendant corresponding to the flight attendant terminal can be made. The server device according to the second aspect may depend from the first aspect.

With this, depending on whether the inquiry source is a passenger terminal or a flight attendant terminal, whether a response tailored to the user of the inquiry source, i.e. a passenger or a flight attendant of the aircraft can be made is determined. Therefore, an appropriate determination tailored to the user can be made.

Moreover, in the server device according to a third aspect, it may be that the first recording medium stores: first response data for responding to the inquiry from the passenger terminal; a second response data for responding to the inquiry from the flight attendant terminal, and in determination of whether the response can be made, the processor: determines, when the inquiry source is the passenger terminal, whether the response can be made by referring to the first response data as the data, and determines, when the inquiry source is the flight attendant terminal, whether the response can be made by referring to the second response data as the data. The server device according to the third aspect may depend from the second aspect.

With this, the first response data for passengers and the second response data for flight attendants are used separately depending on the inquiry source. In other words, when the inquiry source is a passenger terminal and a response cannot be provided by using the first response data, it is determined that a response cannot be made to the passenger terminal. In a similar manner, when the inquiry source is a flight attendant terminal and a response cannot be provided by using the second response data, it is determined that a response cannot be made to the flight attendant terminal. As a result, whether a response can be made can be appropriately determined depending on whether the user of the inquiry source is a passenger or a flight attendant. In addition, separately using the first response data and the second response data allows an appropriate response tailored to the user of the inquiry source to be provided depending on whether the user of the inquiry source is a passenger or a flight attendant.

Moreover, in the server device according to a fourth aspect, it may be that, in access to the resource, the processor accesses a second recording medium that is the resource provided external to the server device and in the aircraft, the second recording medium storing information related to the aircraft as aircraft-related information, and in generation of the response information, the processor generates the response information by using the aircraft-related information stored in the second recording medium. The server device according to the fourth aspect may depend from any one of the first aspect to the third aspect.

With this, the response information is generated by using the information related to the aircraft. Accordingly, it is possible to effectively increase the likelihood that appropriate responses will be provided to the inquiries for various situations about the aircraft.

Moreover, in the server device according to a fifth aspect, it may be that the aircraft-related information includes at least one of: aircraft information indicating a status of the aircraft; flight information indicating a flight plan and a flight status of the aircraft; stock information indicating a total number or quantity of items loaded on the aircraft; lighting information indicating a setting and a status of lighting of the aircraft; or time information indicating an onboard service schedule of the aircraft. The server device according to the fifth aspect may depend from the fourth aspect.

With this, the response information is generated by using the status, the flight plan, the flight status, stock, service schedule, and the like of the aircraft. Accordingly, it is possible to effectively increase the likelihood that specific responses will be provided to the inquiries for various situations about the aircraft.

Moreover, in the server device according to a sixth aspect, it may be that, in the aircraft, each of a plurality of terminal devices is used as the terminal device, when the processor receives the inquiry from an inquiry source that is one of the plurality of terminal devices: in access to the resource, the processor accesses the resource by requesting a flight attendant terminal different from the inquiry source to provide response support for the response, the flight attendant terminal being one of the plurality of terminal devices that is used by a flight attendant of the aircraft; and in generation of the response information, the processor generates the response information by using information from the flight attendant terminal that is treated as the resource. The server device according to the sixth aspect may depend from any one of the first aspect to the fifth aspect.

With this, when a response cannot be made to the inquiry by using the data in the first recording medium included in the server device, the flight attendant terminal is requested to provide response support. Thus, for example, the response information can be generated by using the information received by the flight attendant terminal in response to the input operation performed by the flight attendant. In other words, knowledge of the flight attendant can be used to generate the response information. As a result, it is possible to further increase the likelihood that appropriate responses will be provided to the inquiries for various situations about the aircraft.

Moreover, in the server device according to a seventh aspect, it may be that in access to the resource, the processor accesses the resource by requesting an off-board management system to provide response support for the response, the off-board management system being provided external to the aircraft, and in generation of the response information, the processor generates the response information by using information from the off-board management system that is treated as the resource. The server device according to the seventh aspect may depend from any one of the first aspect to the sixth aspect. For example, the off-board management system is a system provided on the ground.

With this, when a response cannot be made to the inquiry by using the data in the first recording medium included in the server device, the off-board management system is requested to provide response support. Thus, the response information can be generated by using, for example, information received by the off-board management system in response to the input operation performed by an operator, or the search function of the off-board management system. As a result, it is possible to further increase the likelihood that appropriate responses will be provided to the inquiries for various situations about the aircraft.

Moreover, in the server device according to an eighth aspect, it may be that, in the aircraft, each of a plurality of terminal devices is used as the terminal device, and in access to the resource, the processor requests the off-board management system to provide response support when the processor receives the inquiry from an inquiry source that is one of the plurality of terminal devices, and is unable to receive response support from a flight attendant terminal in response to a response support request made to the flight attendant terminal, the flight attendant terminal being one of the plurality of terminal devices that is used by a flight attendant of the aircraft and different from the inquiry source. The server device according to the eighth aspect may depend from the seventh aspect.

With this, when a response cannot be made to the inquiry by using the data in the first recording medium included in the server device and response support cannot be obtained in response to the response support request made to the flight attendant terminal, the off-board management system is further requested to provide response support. With this, the response support request is repeatedly performed, and thus, it is possible to more effectively increase the likelihood that appropriate responses will be provided to the inquiries for various situations about the aircraft.

Moreover, in the server device according to a ninth aspect, it may be that the processor further transmits the response information generated to the flight attendant terminal when the inquiry source is the passenger terminal. The server device according to the ninth aspect may depend from any one of the second aspect to the eighth aspect.

With this, the response information is shared between the passenger terminal and the flight attendant terminals. The flight attendants are therefore able to know the response to the inquiry made from the passenger via the flight attendant terminals, leading to an increased efficiency of the in-flight operations.

Moreover, in the server device according to a tenth aspect, it may be that, in determination of the inquiry source, the processor identifies an attribute of the inquiry source, and determines, based on the attribute identified, whether the inquiry source is the passenger terminal or the flight attendant terminal. The server device according to the tenth aspect may depend from any one of the second aspect to the ninth aspect. For example, the attribute may be an internet protocol (IP) address of the terminal device.

With this, it is possible to accurately determine whether the inquiry source is a passenger terminal or a flight attendant terminal.

Moreover, in the server device according to an eleventh aspect, it may be that, in generation of the response information, the processor, when the inquiry source is the passenger terminal, identifies an attribute of a passenger corresponding to the inquiry source, and generates the response information according to the attribute identified. It may be that the server device according to the eleventh aspect may depend from any one of the second aspect to the tenth aspect.

With this, it is possible to generate appropriate response information according to the attribute of the passenger.

Moreover, in the server device according to a twelfth aspect, it may be that the attribute is at least one of a class, a seat number, and a seat area of a seat of the passenger. The server device according to the twelfth aspect may depend from the eleventh aspect.

With this, depending on whether the seat of the passenger is in the first class, business class, economy class, and the like, it is possible to generate appropriate response information suitable for the service of the class. Moreover, it is also possible to generate, according to the seat number, the seat area, and the like of the seat of the passenger, appropriate response information suitable for the service for the seat number, the seat area and the like. The seat area is the section where the passenger seats are arranged.

Hereinafter, an embodiment will be specifically described with reference to the drawings.

The following embodiment describes a general or specific example. The numerical values, shapes, materials, structural elements, the arrangement and connection of the structural elements, steps, order of the steps, etc., shown in the following embodiment are mere examples, and therefore do not limit the present invention. Among the structural elements in the following embodiment, those not recited in any of the independent claims which indicate the highest concept are described as optional structural elements. Note that the figures are schematic illustrations and are not necessarily precise depictions. In the figures, elements that are essentially the same share like reference signs.

### (Embodiment)

FIG. 1 is an overall configuration diagram of an information processing system according to the present embodiment.

Information processing system 100 according to the present embodiment is provided in aircraft 1 together with second recording medium 200. Information processing system 100 refers to the information stored in second recording medium 200, and further communicates with, for example, off-board management system 300 provided on the ground. Information processing system 100 may communicate with off-board management system 300 via, for example, a satellite or a terrestrial base station. Aircraft 1 is, for example, a passenger plane.

Information processing system 100 has functions as an IFE system, for example, and includes server device 110, a plurality of passenger terminals 120, and a plurality of flight attendant terminals 130. Server device 110 provides various services to passenger terminals 120 and flight attendant terminals 130. One of the various services is making a response to an inquiry. In other words, when server device 110 receives an inquiry from one of passenger terminals 120 or one of flight attendant terminals 130, server device 110 makes a response to the inquiry. The inquiry and the response can be made via chat, for example. Server device 110 has functions as a chatbot.

Passenger terminals 120 are the terminal devices used by the passengers of aircraft 1. Flight attendant terminals 130 are the terminal devices used by the flight attendants of aircraft 1, and are configured as, for example, smartphones or tablet terminals. The flight attendant is specifically an aircrew, and is also referred to as a cabin attendant (CA), a flight attendant (FA), or a cabin crew. The plurality of terminal devices (i.e. passenger terminals 120 and flight attendant terminals 130) communication with server device 110 via wireless or wired connection to server device 110. Wireless communication may be performed via Wi-Fi (registered trademark), Bluetooth (registered trademark), ZigBee (registered trademark) or specified low-power radio.

In such a manner, in aircraft 1 according to the present embodiment, each of a plurality of terminal devices is used as a terminal device that makes an inquiry. Passenger terminals 120 are the terminal devices used by the passengers of aircraft 1 among the plurality of terminal devices, and flight attendant terminals 130 are the terminal devices used by the flight attendants of aircraft 1 among the plurality of terminal devices.

Second recording medium 200 is a resource provided external to server device 110 and in aircraft 1, and stores information related to aircraft 1 as aircraft-related information 210. Aircraft-related information 210 includes aircraft information 211, flight information 212, stock information 213, lighting information 214, and time information 215. Second recording medium 200 may include a single recording medium or may include a plurality of recording mediums. In other words, a plurality of items of information may be stored in the same recording medium or distributed across a plurality of recording mediums. Aircraft information 211 is information indicating the status of aircraft 1. Flight information 212 is information indicating the flight plan and the flight status of aircraft 1. Stock information 213 is information indicating the number or quantity of items loaded on aircraft 1. The items may be, for example, goods sold in aircraft 1, food, or drinks. Lighting information 214 is information indicating the setting and status of lighting of aircraft 1. Time information 215 is information indicating the onboard service schedule of aircraft 1. For example, the onboard service schedule indicates when meals are to be served in aircraft 1, and when preparations for those meals are to be made. Such aircraft-related information 210 is referred to by server device 110. Second recording medium 200 is configured, for example, as a hard disk drive, random access memory (RAM), read only memory (ROM) or semiconductor memory. Second recording medium 200 may be volatile or non-volatile.

FIG. 2 illustrates an example of a configuration of an arrangement of a plurality of passenger terminals 120 according to the present embodiment.

Passenger terminals 120 are attached to respective seats 2 arranged in the cabin of aircraft 1. In other words, each passenger terminal 120 is provided behind the back of seat 2. The display of passenger terminal 120 provided to seat 2 faces towards seat 2 which is another seat 2 immediately behind seat 2, and is viewed by the passenger seated in seat 2 immediately behind. Such passenger terminal 120 is used by the passenger seated immediately behind.

The display of passenger terminal 120 shows the inquiry from the passenger and the response from server device 110 to the inquiry. Passenger terminal 120 also includes an input device, and receives an inquiry in response to the input operation performed on the input device by the passenger. The input device may be a touch sensor provided to the display of passenger terminal 120. In this case, the touch panel includes a display and a touch sensor. The input device may also be, for example, one or more physical buttons, a keyboard, and a touchpad. The input device may also be a microphone. In this case, passenger terminal 120 receives an inquiry in response to the voice of the passenger recorded by the microphone.

FIG. 3 illustrates a block diagram of an example of a configuration of server device 110 according to the present embodiment.

Server device 110 is provided in aircraft 1, and includes processor 111, inputter and outputter 112, and first recording medium 113. Server device 110 may be configured as a stand-alone device or may include a plurality of apparatuses or devices. Processor 111 is configured as an integrated circuit such as a central processing unit (CPU) or a circuit. Inputter and outputter 112 provides interfaces between processor 111 and passenger terminals 120 and flight attendant terminals 130, as well as communication interface between processor 111 and off-board management system 300. Inputter and outputter 112 is also used for accessing second recording medium 200.

First recording medium 113 is a non-transitory recording medium that stores data. First recording medium 113 is configured, for example, as a hard disk drive, RAM, ROM or semiconductor memory. First recording medium 113 may be volatile or non-volatile. First recording medium 113 includes first recorder 113a, second recorder 113b, and third recorder 113c.

First recorder 113a stores first response data 11 for responding to the inquiries from passenger terminals 120. First response data 11 may indicate a plurality of responses to a plurality of potential inquiries from passenger terminals 120, or information used for the responses. Alternatively, first response data 11 may be configured as a machine learning model. The machine learning model is a model generated by machine learning such that for an input of an inquiry from passenger terminal 120, a response for passengers corresponding to the inquiry is output.

Second recorder 113b stores second response data 12 for responding to the inquiries from flight attendant terminals 130. Second response data 12 may indicate a plurality of responses to a plurality of potential inquiries from flight attendant terminals 130, or information used for the responses. Alternatively, second response data 12 may be configured as a machine learning model. The machine learning model is a model generated by machine learning such that for an input of an inquiry from flight attendant terminal 130, the response for flight attendants corresponding to the inquiry is output.

Third recorder 113c stores service data 13 for providing various services to passengers. Service data 13 may include a plurality of items of movie data, a plurality of items of music data, and food and drink data. Each of the plurality of items of movie data and music data is streamed to passenger terminal 120 and reproduced to be viewed by each passenger. The food and drink data relates to food and drink served to the passengers in aircraft 1. Service data 13 may also include other data, such as data indicating tasks to be performed by the flight attendants for the passengers.

In such server device 110, when processor 111 receives, from a terminal device via inputter and outputter 112, an inquiry message including sentences, strings of text, and the like as an inquiry, processor 111 performs natural language processing on the inquiry. The natural language processing according to the present embodiment may be natural language processing (NLP), and the processing of textualizing the inquiry message and analyzing the details of the textualized language. The natural language processing may also include processing performed by artificial intelligence (AI) or simple pattern matching of words included in a sentence or a string of text. Processor 111 then generates, based on the result of the natural language processing, response information that indicates a response to the inquiry by using first recording medium 113. In addition, processor 111 transmits the response information via inputter and outputter 112 to the inquiry source that is one of the terminal devices that has made the inquiry. The response information is displayed on the display of the terminal device that is the inquiry source.

Here, processor 111 determines whether the inquiry source is passenger terminal 120 or flight attendant terminal 130. Processor 111 generates response information for passengers by using first response data 11 stored in first recorder 113a, when the inquiry source is passenger terminal 120. On the other hand, processor 111 generates response information for flight attendants by using second response data 12 stored in second recorder 113b, when the inquiry source is flight attendant terminal 130. With this, even when processor 111 receives the same inquiries from passenger terminal 120 and flight attendant terminal 130, processor 111 is capable of generating and transmitting different response information to passenger terminal 120 and flight attendant terminal 130. In other words, processor 111 is capable of generating response information tailored to the passenger who is the user of passenger terminal 120 when the inquiry source is passenger terminal 120, and is capable of generating response information tailored to the flight attendant who is the user of flight attendant terminal 130 when the inquiry source is flight attendant terminal 130.

Processor 111 may generate response information for the inquiry by narrowing down by category. For example, processor 111 first receives an inquiry, performs natural language processing on the inquiry, and extracts a plurality of categories for the inquiry from among a plurality of predetermined categories. The predetermined categories are defined for each of first response data 11 and second response data 12. Note that each of first response data 11 and second response data 12 includes a hierarchical structure of categories. Processor 111 displays the extracted categories on the display of the inquiry source. When any one of the categories is selected by the inquiry source, processor 111 further extracts a plurality of categories (i.e. subcategories) belonging to the selected category. Processor 111 displays the extracted subcategories on the display of the inquiry source, and receives any one of the subcategories selected by the inquiry source. This narrows down the categories. Such narrowing down by category allows processor 111 to obtain, from first response data 11 or second response data 12, the content that belongs to the final narrowed-down category. The content may be a message, a text, a string of text, or an image. Processor 111 generates response information including the obtained content. Note that first response data 11 and second response data 12 may include different natural language processing algorithms. In this case, processor 111 is capable of accurately performing natural language processing for each of the passengers and the flight attendants by using different algorithms depending on the inquiry source.

### [Specific example 1 of inquiry and response: response can be made by server device 110]

FIG. 4 illustrates an example of an inquiry and a response to the inquiry displayed on passenger terminal 120.

As illustrated in FIG. 4, passenger terminal 120 receives inquiry message Q1 in response to the input operation performed by a passenger. Passenger terminal 120 then makes an inquiry about inquiry message Q1 to server device 110 by transmitting inquiry message Q1 to server device 110. For example, inquiry message Q1 is the message "Are there any action movies?". In response to inquiry message Q1, processor 111 of server device 110 generates response information A1 and transmits response information A1 to passenger terminal 120 to display response information A1 on the display of passenger terminal 120. For example, response information A1 includes the message "These movies are available." and a list of the action movies. With this, a response is made to the inquiry.

Specifically, when processor 111 receives inquiry message Q1 via inputter and outputter 112, processor 111 determines that the sender, i.e. the inquiry source of inquiry message Q1, is passenger terminal 120. For example, processor 111 determines whether the IP address used for transmitting inquiry message Q1 is the address assigned to passenger terminal 120 or the address assigned to flight attendant terminal 130. In the example above, processor 111 determines that the inquiry source is passenger terminal 120 by determining that the IP address is the one assigned to passenger terminal 120. Processor 111 then determines whether a response can be made to the inquiry about inquiry message Q1 by using first response data 11 in first recorder 113a for passengers. For example, processor 111 determines that a response can be made when first response data 11 indicates the message such as "there are no action movies" or "these movies are available" for action movies. Processor 111 then refers to service data 13 in third recorder 113c, searches service data 13 for action movies, and when action movies are found, obtains a list of the action movies. Processor 111 then generates response information A1 that includes the list of the action movies and the message "These movies are available". When processor 111 extracts the category described above through AI natural language processing inference, processor 111 may determine that a response cannot be made when the confidence level of the inference is lower than or equal to a threshold value, and may determine that a response can be made when the confidence level is higher than the threshold value. In the case where processor 111 extracts the category described above by simple pattern matching for each word included in inquiry message Q1, processor 111 may determine that a response cannot be made when there is no matching word, and may determine that a response can be made when there are matching words.

FIG. 5 illustrates an example of an inquiry and a response to the inquiry displayed on flight attendant terminal 130.

As illustrated in FIG. 5, flight attendant terminal 130 receives inquiry message Q2 in response to the input operation performed by a flight attendant. Flight attendant terminal 130 then makes an inquiry about inquiry message Q2 to server device 110 by transmitting inquiry message Q2 to server device 110. For example, inquiry message Q2 is the message "What is to be done next?". In response to inquiry message Q2, processor 111 of server device 110 generates response information A2 and transmits response information A2 to flight attendant terminal 130 to display response information A2 on the display of flight attendant terminal 130. For example, response information A2 includes the message "Outstanding tasks are as below". With this, a response is made to the inquiry.

Specifically, when processor 111 receives inquiry message Q2 via inputter and outputter 112, processor 111 determines that the sender, i.e. the inquiry source of inquiry message Q2, is flight attendant terminal 130. For example, processor 111 determines whether the IP address used for transmitting inquiry message Q2 is the address assigned to passenger terminal 120 or the address assigned to flight attendant terminal 130. In the example above, processor 111 determines that the inquiry source is flight attendant terminal 130 by determining that the IP address is the one assigned to flight attendant terminal 130. Processor 111 then determines whether a response can be made to the inquiry about inquiry message Q2 by using second response data 12 in second recorder 113b for flight attendants. For example, processor 111 determines that a response can be made when second response data 12 indicates a message such as "no outstanding tasks" or "outstanding tasks are as below" for tasks for the flight attendants. Processor 111 then refers to service data 13 in third recorder 113c, searches service data 13 for the outstanding tasks, and when the outstanding tasks are found, obtains a list of the tasks. Processor 111 then generates response information A2 that includes the list of the outstanding tasks and the message "Outstanding tasks are as below".

FIG. 6 illustrates an example of an inquiry made using passenger terminal 120 and a response from server device 110. Note that the inquiry and the response are displayed on the display of passenger terminal 120. However, in FIG. 6, the inquiry and the response are shown outside the display such that the contents of the inquiry and the response are enlarged.

As illustrated in FIG. 6, passenger terminal 120 receives inquiry message Q3 in response to the input operation performed by a passenger. Passenger terminal 120 then makes an inquiry about inquiry message Q3 to server device 110 by transmitting inquiry message Q3 to server device 110. For example, inquiry message Q3 is the message "How do I fill out the arrival card?". In response to inquiry message Q3, processor 111 of server device 110 generates response information A3 and transmits response information A3 to passenger terminal 120 to display response information A3 on the display of passenger terminal 120. For example, response information A3 includes the message "Please fill it out as below." and an image showing how to fill out the arrival card. With this, a response is made to the inquiry.

Specifically, when processor 111 receives inquiry message Q3 via inputter and outputter 112, processor 111 determines that the sender, i.e. the inquiry source of inquiry message Q3, is passenger terminal 120. Processor 111 then determines whether a response can be made to the inquiry about inquiry message Q3 by using first response data 11 in first recorder 113a for passengers. For example, processor 111 determines that a response can be made when first response data 11 indicates the message such as "Please fill it out as below." about how to fill out the arrival card. Processor 111 then refers to service data 13 in third recorder 113c and searches service data 13 for an image indicating how to fill out the arrival card. When the image is found, processor obtains the image. Processor 111 then generates response information A3 that includes the image and the message "Please fill it out as below". Processor 111 may determine that a response can be made when response information A3 is included in first response data 11 about how to fill out the arrival card, and transmit response information A3 to passenger terminal 120.

FIG. 7 illustrates an example of an inquiry made using flight attendant terminal 130 and a response from server device 110. Note that the inquiry and the response are displayed on the display of flight attendant terminal 130. However, in FIG. 7, the inquiry and the response are shown outside the display such that the contents of the inquiry and the response are enlarged.

As illustrated in FIG. 7, flight attendant terminal 130 receives inquiry message Q4 in response to the input operation performed by a flight attendant. Flight attendant terminal 130 then makes an inquiry about inquiry message Q4 to server device 110 by transmitting inquiry message Q4 to server device 110. For example, inquiry message Q4 is the message "Who is calling the flight attendant?". In response to inquiry message Q4, processor 111 of server device 110 generates response information A4 and transmits response information A4 to flight attendant terminal 130 to display response information A4 on the display of flight attendant terminal 130. For example, response information A4 includes the message "There are flight attendant calls at seats 12A and 24F". With this, a response is made to the inquiry.

Specifically, when processor 111 receives inquiry message Q4 via inputter and outputter 112, processor 111 determines that the sender, i.e. the inquiry source of inquiry message Q4, is flight attendant terminal 130. Processor 111 then determines whether a response can be made to the inquiry about inquiry message Q4, by using second response data 12 in second recorder 113b for flight attendants. For example, processor 111 determines that a response can be made when second response data 12 indicates the message such as "there are flight attendant calls" or "there are no flight attendant calls" for the flight attendant calls. Processor 111 then refers to service data 13 in third recorder 113c and searches service data 13 for the seat numbers of the passengers who are calling the flight attendant. When the seat numbers are found, processor 111 obtains a list of the seat numbers and the image indicating the seat numbers. Processor 111 then uses the list of the seat numbers to generate the message "There are flight attendant calls at seats 12A and 24F" and generates response information A4 that includes the message and the image described above.

As described above, in server device 110 according to the present embodiment, processor 111 receives an inquiry from a terminal device in aircraft 1, and uses the data recorded in first recording medium 113 to determine whether a response can be made to the inquiry. When processor 111 determines that a response can be made, processor 111 makes a response to the inquiry by using the data.

In addition, when processor 111 receives an inquiry from the inquiry source, processor 111 determines whether the inquiry source is passenger terminal 120 or flight attendant terminal 130. When the inquiry source is passenger terminal 120, processor 111 then determines whether it is possible to make a response tailored to the passenger corresponding to passenger terminal 120. When the inquiry source is flight attendant terminal 130, processor 111 determines whether it is possible to make a response tailored to the flight attendant corresponding to flight attendant terminal 130. With this, depending on whether the inquiry source is passenger terminal 120 or flight attendant terminal 130, whether it is possible to make a response tailored to the user of the inquiry source, i.e. a passenger or a flight attendant of aircraft 1 is determined. Therefore, an appropriate determination can be made as to whether a response tailored to the user can be made.

Specifically, when the inquiry source is passenger terminal 120, processor 111 refers to first response data 11 for passengers to determine whether a response can be made. When the inquiry source is flight attendant terminal 130, processor 111 refers to second response data 12 for flight attendants to determine whether a response can be made. With this, first response data 11 for passengers and second response data 12 for flight attendants are separately used depending on the inquiry source. In other words, when the inquiry source is passenger terminal 120 and a response cannot be obtained by using first response data 11, it is determined that a response cannot be made to passenger terminal 120. In a similar manner, when the inquiry source is flight attendant terminal 130 and a response cannot be obtained by using second response data 12, it is determined that a response cannot be made to flight attendant terminal 130. As a result, whether a response can be made can be appropriately determined depending on whether the user of the inquiry source is a passenger or a flight attendant. In addition, by using first response data 11 and second response data 12 separately, depending on whether the user of the inquiry source is a passenger or a flight attendant, an appropriate response tailored to the user can be obtained.

In the present embodiment, processor 111 identifies the attribute of the inquiry source, and determines, based on the identified attribute, whether the inquiry source is passenger terminal 120 or flight attendant terminal 130. For example, the attribute is the IP address of the terminal device. With this, it is possible to accurately determine whether the inquiry source is passenger terminal 120 or flight attendant terminal 130. When the inquiry source is passenger terminal 120, processor 111 may also identify the attribute of the passenger corresponding to the inquiry source, and generate response information according to the identified attribute. This allows appropriate response information to be generated according to the attribute of the passenger. Specifically, the attribute may be at least one of: the class, the seat number, or the seat area of seat 2 of the passenger. With this, depending on whether seat 2 of the passenger is in the first class, business class, economy class, and the like, appropriate response information suitable for the service of the class can be generated. Moreover, it is possible to generate, according to the seat number, the seat area, and the like of the seat of the passenger, appropriate response information suitable for the corresponding service. The seat area is the section where the passenger seats are arranged. The attribute may also be, for example, the frequent flyer status, language, age, or gender of the passenger. In this case, too, it is possible to generate appropriate response information suitable for the service of the attribute. Processor 111 may identify the language, age, gender, and the like of the passenger based on the input operation performed by the passenger on passenger terminal 120.

### [Specific example 2 of inquiry and response: response is made by accessing second recording medium]

FIG. 8 illustrates an example of an inquiry made using passenger terminal 120 and a response made using aircraft information 211 from server device 110. Note that the inquiry and the response are displayed on the display of flight attendant terminal 120. However, in FIG. 8, the inquiry and the response are shown outside the display such that the contents of the inquiry and the response are enlarged.

As illustrated in FIG. 8, passenger terminal 120 receives inquiry message Q5 in response to the input operation performed by a passenger. Passenger terminal 120 then makes an inquiry about inquiry message Q5 to server device 110 by transmitting inquiry message Q5 to server device 110. For example, inquiry message Q5 is the message "I would like to drink orange juice". In response to inquiry message Q5, processor 111 of server device 110 generates response information A5 and transmits response information A5 to passenger terminal 120 to display response information A5 on the display of passenger terminal 120. For example, response information A5 includes the messages "Due to the climb, drink service is currently unavailable. Please wait a moment until the service becomes available". With this, a response is made to the inquiry.

Specifically, when processor 111 receives inquiry message Q5 via inputter and outputter 112, processor 111 determines that the sender, i.e. the inquiry source of inquiry message Q5, is passenger terminal 120. Processor 111 then determines whether a response can be made to the inquiry about inquiry message Q5 by using first response data 11 in first recorder 113a for passengers. Here, processor 111 determines that a response cannot be made to the inquiry. For example, processor 111 determines that a response cannot be made to the inquiry when first response data 11 includes a plurality of messages corresponding to the inquiry and it is necessary to select a message corresponding to the current status of aircraft 1 from among the plurality of messages. Alternatively, when processor 111 extracts "drink order" as a category for the inquiry by referring to first response data 11, processor 111 determines that a response cannot be made to the category "drink order". In such a case, processor 111 accesses second recording medium 200 via inputter and outputter 112, and refers to aircraft information 211 of aircraft-related information 210 stored in second recording medium 200. Processor 111 then identifies the current status of aircraft 1 indicated in aircraft information 211, e.g. "climb". With this, processor 111 obtains, from the plurality of messages, the messages "Due to the climb, drink service is currently unavailable. Please wait a moment till the service becomes available" that correspond to the current status of the aircraft, and generates response information A5 that includes the messages. Processor 111 may generate a message corresponding to the identified current status of the aircraft without obtaining one message from among the plurality of messages.

FIG. 9 illustrates an example of an inquiry made using flight attendant terminal 130 and a response made using lighting information 214 from server device 110. Note that the inquiry and the response are displayed on the display of flight attendant terminal 130. However, in FIG. 9, the inquiry and the response are shown outside the display such that the contents of the inquiry and the response are enlarged.

As illustrated in FIG. 9, flight attendant terminal 130 receives inquiry message Q6 in response to the input operation performed by a flight attendant. Flight attendant terminal 130 then makes an inquiry about inquiry message Q6 to server device 110 by transmitting inquiry message Q6 to server device 110. For example, inquiry message Q6 is the message "What is the lighting status for seat 12A?". In response to inquiry message Q6, processor 111 of server device 110 generates response information A6 and transmits response information A6 to flight attendant terminal 130 to display response information A6 on the display of flight attendant terminal 130. For example, response information A6 includes the message "Reading light: ON, Accent light is ON in blue". With this, a response is made to the inquiry.

Specifically, when processor 111 receives inquiry message Q6 via inputter and outputter 112, processor 111 determines that the sender, i.e. the inquiry source of inquiry message Q6, is flight attendant terminal 130. Processor 111 then determines whether a response can be made to the inquiry about inquiry message Q6 by using second response data 12 in second recorder 113b for flight attendants. Here, processor 111 determines that a response cannot be made to the inquiry. For example, processor 111 determines that a response cannot be made to the inquiry when second response data 12 includes a plurality of messages corresponding to the inquiry and a message corresponding to the current lighting status of seat number 12A needs to be selected from among the plurality of messages. Alternatively, when processor 111 extracts "check lighting status" as a category for the inquiry by referring to second response data 12, processor 111 determines that a response cannot be made to the category "check lighting status". In such a case, processor 111 accesses second recording medium 200 via inputter and outputter 112, and refers to lighting information 214 in aircraft-related information 210 stored in second recording medium 200. Processor 111 then identifies the current lighting status for seat 12A indicated in lighting information 214. With this, processor 111 obtains the message "Reading light: ON, Accent light is ON in blue" that corresponds to the current lighting status for seat 12A from among the plurality of messages described above, and generate response information A6 that includes the message. Processor 111 may generate a message corresponding to the identified current lighting status without obtaining one message from among the plurality of messages.

FIG. 10 illustrates an example of an inquiry made using passenger terminal 120 and a response made using flight information 212 from server device 110. Note that the inquiry and the response are displayed on the display of passenger terminal 120. However, in FIG. 10, the inquiry and the response are shown outside the display such that the contents of the inquiry and the response are enlarged.

As illustrated in FIG. 10, passenger terminal 120 receives inquiry message Q7 in response to the input operation performed by a passenger. Passenger terminal 120 then makes an inquiry about inquiry message Q7 to server device 110 by transmitting inquiry message Q7 to server device 110. For example, inquiry message Q7 is the message "When is the arrival time?". In response to inquiry message Q7, processor 111 of server device 110 generates response information A7 and transmits response information A7 to passenger terminal 120 to display response information A7 on the display of passenger terminal 120. For example, response information A7 includes the message "We will arrive in five hours at 17:00 local time". With this, a response is made to the inquiry.

Specifically, when processor 111 receives inquiry message Q7 via inputter and outputter 112, processor 111 determines that the sender, i.e. the inquiry source of inquiry message Q2, is passenger terminal 120. Processor 111 then determines whether a response can be made to the inquiry about inquiry message Q7 by using first response data 11 in first recorder 113a for passengers. Here, processor 111 determines that a response cannot be made to the inquiry. For example, processor 111 determines that a response cannot be made to the inquiry when first response data 11 includes a message corresponding to the inquiry and it is necessary to insert specific parameters, such as time length and time into the message. Alternatively, when processor 111 extracts "check arrival time" as a category for the inquiry by referring to first response data 11, processor 111 determines that a response cannot be made to the category "check arrival time". In such a case, processor 111 accesses second recording medium 200 via inputter and outputter 112, and refers to flight information 212 in aircraft-related information 210 stored in second recording medium 200. Processor 111 then identifies the time taken for aircraft 1 to arrive at the destination and the arrival time, based on the flight plan and the flight status indicated in flight information 212. With this, processor 111 obtains the message "We will arrive in five hours at 17:00 local time." by inserting the identified time length and time into the above message, and generates response information A7 that includes the message. Processor 111 may directly generate a message corresponding to the time length and time without the insertion of the identified time length and time.

FIG. 11A illustrates an example of an inquiry made using flight attendant terminal 130 and a response made using time information 215 from server device 110. Note that the inquiry and the response are displayed on the display of flight attendant terminal 130. However, in FIG. 11A, the inquiry and the response are shown outside the display such that the contents of the inquiry and the response are enlarged.

As illustrated in FIG. 11A, flight attendant terminal 130 receives inquiry message Q8 in response to the input operation performed by a flight attendant. Flight attendant terminal 130 then makes an inquiry about inquiry message Q8 to server device 110 by transmitting inquiry message Q8 to server device 110. For example, inquiry message Q8 is the message "When is the next meal?". In response to inquiry message Q8, processor 111 of server device 110 generates response information A8 and transmits response information A8 to flight attendant terminal 130 to display response information A8 on the display of flight attendant terminal 130. For example, response information A8 includes the messages "Dinner needs to be served in an hour. Please start preparation in 30 minutes". With this, a response is made to the inquiry.

Specifically, when processor 111 receives inquiry message Q8 via inputter and outputter 112, processor 111 determines that the sender, i.e. the inquiry source of inquiry message Q8, is flight attendant terminal 130. Processor 111 then determines whether a response can be made to the inquiry about inquiry message Q8 by using second response data 12 in second recorder 113b for flight attendants. Here, processor 111 determines that a response cannot be made to the inquiry. For example, processor 111 determines that a response cannot be made to the inquiry when second response data 12 includes a message corresponding to the inquiry and it is necessary to insert, into the message, the time to start serving the meal, the time to start preparing the meal, the type of meal, and the like. Alternatively, when processor 111 extracts "check meal" as a category for the inquiry by referring to second response data 12, processor 111 determines that a response cannot be made to the category "check meal". In such a case, processor 111 accesses second recording medium 200 via inputter and outputter 112, and refers to time information 215 in aircraft-related information 210 stored in second recording medium 200. Processor 111 then identifies the time and type of meal indicated in time information 215. With this, processor 111 obtains the messages "Dinner needs to be served in an hour. Please start preparation in 30 minutes." by inserting the identified time and type of meal to the above message, and generates response information A8 that includes the messages. Processor 111 may directly generate a message corresponding to the time and the type of meal without the insertion of the identified time and type of meal.

FIG. 11B illustrates an example of an inquiry made using passenger terminal 120 and a response made using time information 215 from server device 110. Note that the inquiry and the response are displayed on the display of passenger terminal 120. However, in FIG. 11B, the inquiry and the response are shown outside the display such that the contents of the inquiry and the response are enlarged.

As illustrated in FIG. 11B, passenger terminal 120 receives inquiry message Q8 in response to the input operation performed by a passenger. Passenger terminal 120 then makes an inquiry about inquiry message Q8 to server device 110 by transmitting inquiry message Q8 to server device 110. Inquiry message Q8 is the same as inquiry message Q8 in the example in FIG. 11A, and, for example, is the message "When is the next meal?". In response to inquiry message Q8, processor 111 of server device 110 generates response information A8a and transmits response information A8a to passenger terminal 120 to display response information A8a on the display of passenger terminal 120. For example, response information A8a includes the message "Dinner will be served in an hour". With this, a response is made to the inquiry.

Specifically, when processor 111 receives inquiry message Q8 via inputter and outputter 112, processor 111 determines that the sender, i.e. the inquiry source of inquiry message Q8, is passenger terminal 120. Processor 111 then determines whether a response can be made to the inquiry about inquiry message Q8 by using first response data 11 in first recorder 113a for passengers. Here, processor 111 determines that a response cannot be made to the inquiry. For example, processor 111 determines that a response cannot be made to the inquiry when first response data 11 includes a message corresponding to the inquiry and it is necessary to insert, into the message, the time till the meal is started to be served, the type of meal, and the like. Alternatively, when processor 111 extracts "check meal" as a category for the inquiry by referring to first response data 11, processor 111 determines that a response cannot be made to the category "check meal". In such a case, processor 111 accesses second recording medium 200 via inputter and outputter 112, and refers to time information 215 in aircraft-related information 210 stored in second recording medium 200. Processor 111 then identifies the time and type of meal indicated in time information 215. With this, processor 111 obtains the message "Dinner will be served in one hour." by inserting the identified time and type of meal into the above message, and generates response information A8a that includes the message. Processor 111 may directly generate a message corresponding to the time and the type of meal without the insertion of the identified time and type of meal. When time information 215 indicates the meal content (e.g., chicken, fish, etc.), processor 111 may also include the meal content in the message of response information A8a.

As illustrated in the examples in FIG. 11A and FIG.11B, even when processor 111 receives the same inquiries from passenger terminal 120 and flight attendant terminal 130, processor 111 is capable of generating different response information and transmitting the different response information to passenger terminal 120 and flight attendant terminal 130. In other words, processor 111 is capable of generating the response information tailored to the passenger who is the user of passenger terminal 120 when the inquiry source is passenger terminal 120, and is capable of generating the response information tailored to the flight attendant who is the user of flight attendant terminal 130 when the inquiry source is flight attendant terminal 130.

FIG. 12 illustrates an example of an inquiry made using passenger terminal 120 and a response made using stock information 213 from server device 110. Note that the inquiry and the response are displayed on the display of passenger terminal 120. However, in FIG. 12, the inquiry and the response are shown outside the display such that the contents of the inquiry and the response are enlarged.

As illustrated in FIG. 12, passenger terminal 120 receives inquiry message Q9 in response to the input operation performed by a passenger. Passenger terminal 120 then makes an inquiry about inquiry message Q9 to server device 110 by transmitting inquiry message Q9 to server device 110. For example, inquiry message Q9 is the message "I would like to buy five model airplanes". In response to inquiry message Q9, processor 111 of server device 110 generates response information A9 and transmits response information A9 to passenger terminal 120 to display response information A9 on the display of passenger terminal 120. For example, response information A9 includes the messages "There are only three in stock, so you may order only three. Is that OK?". With this, a response is made to the inquiry.

Specifically, when processor 111 receives inquiry message Q9 via inputter and outputter 112, processor 111 determines that the sender, i.e. the inquiry source of inquiry message Q9, is passenger terminal 120. Processor 111 then determines whether a response can be made to the inquiry about inquiry message Q9 by using first response data 11 in first recorder 113a for passengers. Here, processor 111 determines that a response cannot be made to the inquiry. For example, processor 111 determines that a response cannot be made to the inquiry when first response data 11 includes a plurality of messages corresponding to the inquiry and it is necessary to select a message corresponding to the stock of the model airplanes from among the plurality of messages. Alternatively, when processor 111 extracts "in-flight shopping order" as a category for the inquiry by referring to first response data 11, processor 111 determines that a response cannot be made to the category "in-flight shopping order". In such a case, processor 111 accesses second recording medium 200 via inputter and outputter 112, and refers to stock information 213 in aircraft-related information 210 stored in second recording medium 200. Processor 111 then identifies the number of model airplanes in stock indicated in stock information 213. With this, processor 111 selects a message, from among the plurality of messages, which corresponds to the identified number of items in stock (e.g., 3) and the number of ordered items (e.g., 5), and inserts the identified number of items in stock into the message. As a result, processor 111 obtains the messages "There are only three in stock, so you may order only three. Is that OK?", and generates response information A9 that includes the messages. Processor 111 may directly generate a message corresponding to the identified number of items in stock without the insertion of the identified number of items in stock.

FIG. 13 illustrates an example of an inquiry made using flight attendant terminal 130 and a response made using stock information 213 from server device 110. Note that the inquiry and the response are displayed on the display of flight attendant terminal 130. However, in FIG. 13, the inquiry and the response are shown outside the display such that the contents of the inquiry and the response are enlarged.

As illustrated in FIG. 13, flight attendant terminal 130 receives inquiry message Q10 in response to the input operation performed by a flight attendant. Flight attendant terminal 130 then makes an inquiry about inquiry message Q10 to server device 110 by transmitting inquiry message Q10 to server device 110. For example, inquiry message Q10 is the message "How is our orange juice stock?". In response to inquiry message Q10, processor 111 of server device 110 generates response information A10 and transmits response information A10 to flight attendant terminal 130 to display response information A10 on the display of flight attendant terminal 130. For example, response information A10 includes the message "15 packs". With this, a response is made to the inquiry.

Specifically, when processor 111 receives inquiry message Q10 via inputter and outputter 112, processor 111 determines that the sender, i.e. the inquiry source of inquiry message Q10, is flight attendant terminal 130. Processor 111 then determines whether a response can be made to the inquiry about inquiry message Q10 by using second response data 12 in second recorder 113b for flight attendants. Here, processor 111 determines that a response cannot be made to the inquiry. For example, processor 111 determines that a response cannot be made to the inquiry when second response data 12 includes a message corresponding to the inquiry and it is necessary to insert the quantity of the orange juice in stock into the message. Alternatively, when processor 111 extracts "check stock" as a category for the inquiry by referring to second response data 12, processor 111 determines that a response cannot be made to the category "check stock". In such a case, processor 111 accesses second recording medium 200 via inputter and outputter 112 and refers to stock information 213 in aircraft-related information 210 stored in second recording medium 200. Processor 111 then identifies the quantity of the orange juice in stock (e.g., 15 packs) indicated in stock information 213. With this, processor 111 obtains the message "15 packs" by inserting the identified quantity in stock to the above message and generates response information A10 that includes the message. Processor 111 may directly generate a message corresponding to the identified quantity in stock without the insertion of the identified quantity in stock.

As described above, in the present embodiment, when processor 111 receives an inquiry from a terminal device in aircraft 1, processor 111 determines whether a response can be made to the inquiry by using the data recorded in first recording medium 113. When processor 111 extracts the category described above through AI natural language processing inference, processor 111 may determine that a response cannot be made when the confidence level of the inference is lower than or equal to a threshold value, and may determine that a response can be made when the confidence level is higher than the threshold value. In the case where processor 111 extracts the category described above by simple pattern matching for each word in the inquiry message, processor 111 may determine that a response cannot be made when there is no matching word, or may determine that a response can be made when there are matching words. Moreover, processor 111 may also determine that a response cannot be made when there is no response information itself for the inquiry in the data of first recording medium 113, and may determine that a response can be made when there is response information in the data of first recording medium 113. Processor 111 then accesses a resource provided external to server device 110 when processor 111 determines that a response cannot be made. In the examples in FIG. 8 to FIG. 13, the resource is second recording medium 200. Processor 111 then makes a response by generating response information by using the resource and transmitting the generated response information to the terminal device. With this, even when a response cannot be made to the inquiry by using the data in first recording medium 113 included in server device 110, a response is made to the inquiry by using a resource provided external to server device 110. Accordingly, it is possible to increase the likelihood that appropriate responses will be provided to inquiries for various situations about aircraft 1.

Moreover, as in the examples in FIG. 8 to FIG. 13, processor 111 accesses second recording medium 200 which is a resource provided external to server device 110 and in aircraft 1 and which stores information related to aircraft 1 as aircraft-related information 210. Processor 111 then generates response information by using aircraft-related information 210 stored in second recording medium 200. With this, the response information is generated by using the information related to aircraft 1, and thus, it is possible to effectively increase the likelihood that appropriate responses will be provided to the inquiries for various situations about aircraft 1.

Moreover, in the present embodiment, aircraft-related information 210 includes aircraft information 211, flight information 212, stock information 213, lighting information 214, and time information 215. Aircraft-related information 210 may include at least one of these items of information, or may include other information. With this, the response information is generated by using the status, the flight plan, the flight status, stock, onboard service schedule, and the like of aircraft 1. Thus, it is possible to effectively increase the likelihood that specific responses will be provided to the inquiries for various situations about aircraft 1. Aircraft-related information 210 may be updated as necessary by processor 111 based on the current status of aircraft 1.

### [Specific example 3 of inquiry and response: response is made with support request]

FIG. 14 illustrates an example of an inquiry made using passenger terminal 120 and a response from server device 110 using response support. Note that the inquiry and the response are displayed on the display of passenger terminal 120. However, in FIG. 14, the inquiry and the response are shown outside the display such that the contents of the inquiry and the response are enlarged.

As illustrated in FIG. 14, passenger terminal 120 receives inquiry message Q11 in response to the input operation performed by a passenger. Passenger terminal 120 then makes an inquiry about inquiry message Q11 to server device 110 by transmitting inquiry message Q11 to server device 110. For example, inquiry message Q11 is the message "Please tell me the location of my connecting flight". In response to inquiry message Q11, processor 111 of server device 110 generates response information A11 and transmits response information A11 to passenger terminal 120 to display response information A11 on the display of passenger terminal 120. For example, response information A11 includes the message "Gate 15 in Terminal 1" and a map indicating the location of the connecting flight. With this, a response is made to the inquiry.

Specifically, when processor 111 receives inquiry message Q11 via inputter and outputter 112, processor 111 determines that the sender, i.e. the inquiry source of inquiry message Q11, is passenger terminal 120. Processor 111 then determines whether a response can be made to the inquiry about inquiry message Q11 by using first response data 11 in first recorder 113a for passengers. Here, processor 111 determines that a response cannot be made to the inquiry. For example, processor 111 determines that a response cannot be made to the inquiry when first response data 11 includes no message (or category) corresponding to the inquiry. In such a case, processor 111 accesses second recording medium 200 via inputter and outputter 112, and refers to aircraft-related information 210 stored in second recording medium 200. Processor 111 then identifies the next airplane that the passenger will board from the destination of aircraft 1, based on the information indicated in aircraft-related information 210 and related to the boarding pass of the passenger who is the user of passenger terminal 120. However, processor 111 requests flight attendant terminal 130 to provide response support because the terminal number and the gate number from which the next airplane will depart cannot be identified. For example, processor 111 notifies flight attendant terminal 130 of the flight number of the next airplane identified along with inquiry message Q11, and prompts the flight attendant of flight attendant terminal 130 to enter the terminal number and the gate number from which the airplane will depart.

Alternatively, processor 111 refers to first response data 11 and extracts "check connecting flight information" as a category for the inquiry. Processor 111 then determines that a response cannot be made to the inquiry when first response data 11 indicates "inquiry with flight attendant" corresponding to the category. Processor 111 then requests flight attendant terminal 130 to provide response support as described above.

When flight attendant terminal 130 receives the terminal number and the gate number in response to the input operation performed by the flight attendant, flight attendant terminal 130 transmits response support information indicating the terminal number and the gate number to server device 110. When processor 111 of server device 110 obtains the response support information from flight attendant terminal 130 via inputter and outputter 112, for example, processor 111 reads the map of the airport located at the destination from service data 13 in first recording medium 113. Processor 111 then generates a map indicating the location for the connecting flight by marking the terminal number and the gate number on the map, and further generates the message "Gate 15 in Terminal 1". As a result, processor 111 generates response information A11 that includes the message "Gate 15 in Terminal 1" and a map indicating the location for the connecting flight.

On the other hand, flight attendant terminal 130 notifies server device 110 that response support cannot be provided, when flight attendant terminal 130 does not receive the input operation performed by a flight attendant, that is, the terminal number and the gate number. When processor 111 of server device 110 receives the notification indicating that the response support cannot be provided from flight attendant terminal 130 via inputter and outputter 112, processor 111 further requests off-board management system 300 to provide response support. For example, processor 111 notifies off-board management system 300 of the identified flight number of the next airplane together with inquiry message Q11, and prompts off-board management system 300 to transmit response support information indicating the terminal number and the gate number from which the airplane will depart.

Off-board management system 300 searches for the terminal number and the gate number, and transmits response support information indicating the terminal number and the gate number to server device 110. Instead of performing a search, off-board management system 300 may receive the terminal number and the gate number in response to the input operation performed by an operator. When processor 111 of server device 110 obtains the response support information from off-board management system 300 via inputter and outputter 112, for example, in a similar manner to above, processor 111 reads the map of the airport located at the destination from service data 13 in first recording medium 113. Processor 111 then generates a map indicating the location for the connecting flight by marking the terminal number and the gate number on the map, and further generates the message "Gate 15 in Terminal 1". As a result, processor 111 generates response information A11 that includes the message "Gate 15 in Terminal 1" and a map indicating the location for the connecting flight.

FIG. 15 illustrates another example of an inquiry made using passenger terminal 120 and a response from server device 110 using response support. Note that the inquiry and the response are displayed on the display of passenger terminal 120. However, in FIG. 15, the inquiry and the response are shown outside the display such that the contents of the inquiry and the response are enlarged.

As illustrated in FIG. 15, passenger terminal 120 receives inquiry message Q12 in response to the input operation performed by a passenger. Passenger terminal 120 then makes an inquiry about inquiry message Q12 to server device 110 by transmitting inquiry message Q12 to server device 110. For example, inquiry message Q12 is the message "Please arrange a hotel as my airplane is being delayed". In response to inquiry message Q12, processor 111 of server device 110 generates response information A12 and transmits response information A12 to passenger terminal 120 to display response information A12 on the display of passenger terminal 120. For example, response information A12 includes the message "Hotel ABC has been arranged". With this, a response is made to the inquiry.

Specifically, when processor 111 receives inquiry message Q12 via inputter and outputter 112, processor 111 determines that the sender, i.e. the inquiry source of inquiry message Q12, is passenger terminal 120. Processor 111 then determines whether a response can be made to the inquiry about inquiry message Q12 by using first response data 11 in first recorder 113a for passengers. Here, processor 111 determines that a response cannot be made to the inquiry. For example, processor 111 determines that a response cannot be made to the inquiry when first response data 11 includes no message (or category) corresponding to the inquiry. In such a case, processor 111 accesses second recording medium 200 via inputter and outputter 112, and refers to flight information 212 in aircraft-related information 210 stored in second recording medium 200. Processor 111 then identifies the estimated arrival time of aircraft 1 indicated in flight information 212. However, processor 111 cannot arrange a hotel. Therefore, processor 111 requests flight attendant terminal 130 to provide response support. In other words, processor 111 notifies flight attendant terminal 130 of the estimated arrival time together with inquiry message Q12, and prompts the flight attendant of flight attendant terminal 130 to arrange a hotel according to the estimated arrival time.

Alternatively, processor 111 refers to first response data 11, and extracts "hotel arrangement" as a category corresponding to the inquiry. Processor 111 then determines that a response cannot be made to the inquiry when first response data 11 indicates "inquiry with flight attendant" corresponding to the category. Processor 111 then requests flight attendant terminal 130 to provide response support as described above.

For example, when the flight attendant cannot make a hotel arrangement, flight attendant terminal 130 notifies server device 110 that the response support cannot be provided in response to the input operation performed by the flight attendant. When processor 111 of server device 110 receives the notification indicating that the response support cannot be provided from flight attendant terminal 130 via inputter and outputter 112, processor 111 further requests off-board management system 300 to provide response support. For example, processor 111 notifies off-board management system 300 of the estimated arrival time described above together with inquiry message Q12, and prompts off-board management system 300 to make a hotel arrangement according to the estimated arrival time.

Off-board management system 300 searches for a hotel that the passenger can stay after the estimated arrival time, makes a reservation, and transmits response support information indicating Hotel ABC as the hotel to server device 110. An operator of off-board management system 300 may perform the search and reservation of accommodation instead of off-board management system 300. In this case, off-board management system 300 transmits, to server device 110, response support information indicating Hotel ABC as the hotel arranged by the operator. When processor 111 of server device 110 obtains the response support information from off-board management system 300 via inputter and outputter 112, processor 111 generates, based on the response support information, response information A12 that includes the message "Hotel ABC has been arranged". When an operator makes an accommodation reservation, for example, a chat may be exchanged between off-board management system 300 and passenger terminal 120 or flight attendant terminal 130 via server device 110.

FIG. 16 illustrates another example of an inquiry made using flight attendant terminal 130 and a response from server device 110 using response support. Note that the inquiry and the response are displayed on the display of flight attendant terminal 130. However, in FIG. 16, the inquiry and the response are shown outside the display such that the contents of the inquiry and the response are enlarged.

As illustrated in FIG. 16, flight attendant terminal 130 receives inquiry message Q13 in response to the input operation performed by a first flight attendant. Flight attendant terminal 130 then makes an inquiry about inquiry message Q13 to server device 110 by transmitting inquiry message Q13 to server device 110. For example, inquiry message Q13 is "A passenger has a fever. Please tell us what to do". In response to inquiry message Q13, processor 111 of server device 110 generates response information A13 and transmits response information A13 to flight attendant terminal 130 to display response information A13 on the display of flight attendant terminal 130. For example, response information A13 includes the message "As a first aid, ...". With this, a response is made to the inquiry.

Specifically, when processor 111 receives inquiry message Q13 via inputter and outputter 112, processor 111 determines that the sender, i.e. the inquiry source of inquiry message Q13, is flight attendant terminal 130. Processor 111 then determines whether a response can be made to the inquiry about inquiry message Q13 by using second response data 12 in second recorder 113b for flight attendants. Here, processor 111 determines that a response cannot be made to the inquiry. For example, processor 111 determines that a response cannot be made to the inquiry when second response data 12 includes no message (or category) corresponding to the inquiry. In such a case, processor 111 accesses second recording medium 200 via inputter and outputter 112 and refers to aircraft-related information 210 stored in second recording medium 200. However, since processor 111 cannot respond to the inquiry even by referring to aircraft-related information 210, processor 111 requests flight attendant terminal 130 of a second flight attendant to provide response support. Note that the second flight attendant is a flight attendant different from the first flight attendant who is the user of the inquiry source, and flight attendant terminal 130 of the second flight attendant is a terminal device different from the inquiry source. For example, processor 111 notifies flight attendant terminal 130 of the second flight attendant of inquiry message Q13, and prompts the second flight attendant to enter a response to the inquiry about inquiry message Q13.

Alternatively, processor 111 refers to second response data 12 and extracts "dealing with sick persons" as a category for the inquiry. Processor 111 then determines that a response cannot be made to the inquiry when second response data 12 indicates "inquire with another flight attendant" corresponding to the category. Processor 111 then requests flight attendant terminal 130 of the second flight attendant to provide response support as described above.

As a result, the second flight attendant enters, to flight attendant terminal 130, the measure to be taken for the passenger with a fever. With this, when flight attendant terminal 130 of the second flight attendant receives response support information indicating the measure to be taken in response to the input operation performed by the second flight attendant, flight attendant terminal 130 of the second flight attendant transmits the response support information to server device 110. When processor 111 of server device 110 obtains the response support information from flight attendant terminal 130 of the second flight attendant via inputter and outputter 112, processor 111 generates the message "As a first aid measure..." based on the response support information. As a result, processor 111 generates response information A13 that includes the message "As first aid measure...". The response support information may be the same information as response information A13.

On the other hand, when the second flight attendant cannot enter the measure to be taken described above, i.e., flight attendant terminal 130 of the second flight attendant does not receive the input operation performed by the second flight attendant, i.e., the response support information, flight attendant terminal 130 of the second flight attendant notifies server device 110 that the response support cannot be provided. When processor 111 of server device 110 receives the notification indicating that the response support cannot be provided from flight attendant terminal 130 of the second flight attendant via inputter and outputter 112, processor 111 further requests off-board management system 300 to provide response support. For example, processor 111 transmits inquiry message Q13 to off-board management system 300, and prompts off-board management system 300 to transmit response support information indicating the measure to be taken for the passenger with a fever.

Off-board management system 300 transmits the response support information to server device 110. When processor 111 of server device 110 obtains the response support information from flight attendant terminal 130 via inputter and outputter 112, processor 111 generates response information A13 that includes the measure to be taken indicated by the response support information, i.e., the message "As a first aid measure, ...".

As described above, in the present embodiment, when processor 111 receives an inquiry from the inquiry source which is one of the plurality of terminal devices, processor 111 accesses a resource by requesting flight attendant terminal 130 which is one of the plurality of terminal devices that is different from the inquiry source and used by a flight attendant of aircraft 1 to provide response support. Processor 111 then generates response information by using the information from flight attendant terminal 130, which is treated as a resource. With this, when a response cannot be made to the inquiry by using the data in first recording medium 113 included in server device 110, flight attendant terminal 130 is requested to provide response support. Thus, for example, response information can be generated by using the information received by flight attendant terminal 130 in response to the input operation performed by the flight attendant. In other words, knowledge of the flight attendant can be used to generate the response information. As a result, it is possible to further increase the likelihood that appropriate responses will be provided to the inquiries for various situations about aircraft 1.

Moreover, in the present embodiment, processor 111 accesses the resource by requesting off-board management system 300 that is provided external to aircraft 1 to provide response support. Processor 111 then generates response information by using the information from off-board management system 300 that is treated as a resource. With this, when a response cannot be made to the inquiry by using the data in first recording medium 113 included in server device 110, off-board management system 300 is requested to provide response support. Thus, response information can be generated by using, for example, information received by off-board management system 300 in response to the input operation performed by an operator, or the search function of off-board management system 300. Accordingly, it is possible to further increase the likelihood that appropriate responses will be provided to the inquiries for various situations about aircraft 1.

Moreover, in the present embodiment, more specifically, processor 111 requests off-board management system 300 to provide response support when processor 111 receives an inquiry from the inquiry source that is one of the plurality of terminal devices, and is unable to receive response support from flight attendant terminal 130 in response to a response support request made to flight attendant terminal 130. Flight attendant terminal 130 is different from the inquiry source and is one of the plurality of terminal devices that is used by a flight attendant of aircraft 1. With this, when a response cannot be made to the inquiry by using the data in first recording medium 113 included in server device 110 and response support cannot be obtained in response to the response support request made to flight attendant terminal 130, off-board management system 300 is further requested to provide response support. Accordingly, the response support request is repeatedly made, and thus, it is possible to further increase the likelihood that appropriate responses will be provided to the inquiries for various situations about aircraft 1.

### [Process flow]

FIG. 17 is a sequence diagram of an example of processing performed by information processing system 100 until a response is provided for the inquiry made from passenger terminal 120.

First, passenger terminal 120 makes an inquiry to server device 110 in response to the input operation performed by a passenger (step S1). In other words, the inquiry message is transmitted from passenger terminal 120 to server device 110. When server device 110 receives the inquiry, server device 110 determines that the inquiry source is passenger terminal 120 (step S2). Server device 110 then determines that server device 110 alone cannot make a response to the inquiry by referring to first response data 11 in first recorder 113a that corresponds to the inquiry source (step S3). For example, processor 111 may determine that a response cannot be made when the response information itself corresponding to the inquiry is not included in first response data 11 in first recording medium 113, and may determine that a response can be made when the response information is included in first response data 11. Server device 110 then accesses second recording medium 200 (step S4), and obtains all or part of aircraft-related information 210 stored in second recording medium 200 (step S5).

Server device 110 then determines that a response can be made to the inquiry by using the all or part of aircraft-related information 210 obtained in step S5 (step S6). As a result, server device 110 generates response information that indicates the response to the inquiry by using the all or part of aircraft-related information 210, and transmits the response information to passenger terminal 120 that is the inquiry source (step S7). With this, passenger terminal 120 obtains the response information and displays content such as the messages, images and the like indicated by the response information (step S8). In other words, a response is made to the inquiry made in step S1.

When server device 110 determines that information of the inquiry and response needs to be shared (step S9), server device 110 transmits inquiry and response result information, including the inquiry message and the response information, to one or more flight attendant terminals 130 (step S10). When one or more flight attendant terminals 130 obtain the inquiry and response result information, one or more flight attendant terminals 130 display the content such as the messages indicated by the inquiry and response result information (step S11). In this way, processor 111 according to the present embodiment also transmits the inquiry and response result information that includes the generated response information to flight attendant terminals 130, when the inquiry source is passenger terminal 120. This allows the response information to be shared between passenger terminal 120 and flight attendant terminals 130. The flight attendants are therefore able to know the response to the inquiry made from the passenger via flight attendant terminals 130, leading to an increased efficiency of the in-flight operations of aircraft 1.

FIG. 18 is a sequence diagram illustrating another example of processing performed by information processing system 100 until a response is provided to the inquiry made from passenger terminal 120.

First, steps S1 to S5 in FIG. 17 are performed. However, in the example in FIG. 18, server device 110 determines that a response cannot be made to the inquiry even by using all or part of aircraft-related information 210 obtained in step S5 (step S6a). In this case, server device 110 requests one or more flight attendant terminals 130 to provide response support (step S21). Each of the one or more flight attendant terminals 130 displays the inquiry message transmitted from passenger terminal 120 in step S1 when flight attendant terminal 130 receives the response support request (step S22). With this, each of the one or more flight attendant terminals 130 prompts the flight attendant of flight attendant terminal 130 to enter response support information that is information for supporting the response to the inquiry message. The response support information may include messages, images, and the like used in the response, or may be the response itself or response information. As a result, at least one of the one or more flight attendant terminals 130 receives the response support information in response to the input operation performed by the flight attendant (step S23). At least one flight attendant terminal 130 transmits the received response support information to server device 110 (step S24).

When server device 110 obtains the response support information, server device 110 generates the response information based on the response support information, and transmits the response information to passenger terminal 120 that is the inquiry source (step S25). With this, passenger terminal 120 obtains the response information, and displays content such as the message, image, and the like indicated by the response information (step S8). In other words, a response is made to the inquiry made in step S1. Furthermore, steps S9 to S11 are performed in a similar manner to the example illustrated in FIG. 17.

FIG. 19 is a sequence diagram illustrating another example of processing performed by information processing system 100 until a response is provided for the inquiry made from passenger terminal 120.

First, steps S1 to S5, S6a, S21, and S22 in FIG. 18 are performed. However, in the example in FIG. 19, the flight attendants cannot provide response support. In other words, each of all flight attendant terminals 130 that have received the response support request notifies server device 110 that the response support cannot be provided in response to the input operation performed by the flight attendant (step S23a). In addition, flight attendant terminal 130 may notify server device 110 that the response support cannot be provided, when response support information has not been received for a predetermined period after the receipt of the response support request. In this case, server device 110 requests off-board management system 300 to provide response support (step S31). When off-board management system 300 receives the response support request, off-board management system 300 generates response support information and transmits the response support information to server device 110 (step S32).

When server device 110 obtains the response support information, server device 110 generates response information based on the response support information, and transmits the response information to passenger terminal 120 that is the inquiry source (step S33). With this, passenger terminal 120 obtains the response information, and displays content such as the message, image, and the like indicated by the response information (step S8). In other words, a response is made to the inquiry made in step S1. Furthermore, steps S9 to S11 are performed in a similar manner to the example illustrated in FIG. 17.

FIG. 20 is a sequence diagram illustrating an example of processing performed by information processing system 100 until a response is provided for the inquiry made from flight attendant terminal 130.

First, first flight attendant terminal 131 that is one of a plurality of flight attendant terminals 130 makes an inquiry to server device 110 in response to the input operation performed by a first flight attendant (step S41). In other words, the inquiry message is transmitted from first flight attendant terminal 131 to server device 110. When server device 110 receives the inquiry, server device 110 determines that the inquiry source is flight attendant terminal 130 (step S42). Server device 110 then determines that server device 110 alone cannot make a response to the inquiry by referring to first response data 11 in first recorder 113a corresponding to the inquiry source (step S43). Server device 110 then accesses second recording medium 200 (step S44) and obtains all or part of aircraft-related information 210 stored in second recording medium 200 (step S45).

Server device 110 then determines that a response can be made to the inquiry by using all or part of aircraft-related information 210 obtained in step S45 (step S46). As a result, server device 110 generates response information that indicates the response to the inquiry by using all or part of aircraft-related information 210, and transmits the response information to first flight attendant terminal 131 that is the inquiry source (step S47). With this, first flight attendant terminal 131 obtains the response information, and displays content such as the message, image and the like indicated by the response information (step S48). In other words, a response is made to the inquiry made in step S41.

When server device 110 determines that information of the inquiry and the response needs to be shared (step S49), server device 110 transmits inquiry and response result information that includes the inquiry message and the response information to one or more second flight attendant terminals 132 (step S50). Note that one or more second flight attendant terminals 132 are one or more flight attendant terminals 130 excluding first flight attendant terminal 131 among the plurality of flight attendant terminals 130. When one or more second flight attendant terminals 132 obtain the inquiry and response result information, one or more second flight attendant terminals 132 displays the content such as the messages and the like indicated by the inquiry and response result information (step S51).

FIG. 21 is a sequence diagram illustrating another example of processing performed by information processing system 100 until a response is provided for the inquiry made from flight attendant terminal 130.

First, steps S41 to S45 in FIG. 20 are performed. However, in the example in FIG. 21, server device 110 determines that a response cannot be made to the inquiry even by using all or part of aircraft-related information 210 obtained in step S45 (step S46a). In this case, server device 110 requests one or more second flight attendant terminals 132 to provide response support (step S61). When each of one or more second flight attendant terminals 132 receives the response support request, each second flight attendant terminal 132 displays the inquiry message transmitted from first flight attendant terminal 131 in step S41 (step S62). With this, each of one or more second flight attendant terminals 132 prompts the flight attendant of second flight attendant terminal 132 to enter response support information that is information for supporting the response to the inquiry message. As a result, at least one of one or more second flight attendant terminals 132 receives the response support information in response to the input operation performed by the second flight attendant (step S63). At least one second flight attendant terminal 132 then transmits the received response support information to server device 110 (step S64).

When server device 110 obtains the response support information, server device 110 generates response information based on the response support information, and transmits the response information to first flight attendant terminal 131 that is the inquiry source (step S65). With this, first flight attendant terminal 131 obtains the response information, and displays content such as the message, image and the like indicated by the response information (step S48). In other words, a response is made to the inquiry made in step S41. Furthermore, steps S49 to S51 are performed in a similar manner to the example illustrated in FIG. 20.

FIG. 22 is a sequence diagram illustrating another example of processing performed by information processing system 100 until a response is provided for the inquiry made from flight attendant terminal 130.

First, steps S41 to S45, S46a, S61, and S62 in FIG. 21 are performed. However, in the example in FIG. 21, the second flight attendants cannot provide response support. In other words, each of second flight attendant terminals 132 which have received the response support request notifies server device 110 that the response support cannot be provided in response to the input operation performed by the second flight attendant (step S63a). In addition, second flight attendant terminal 132 may notify server device 110 that the response support cannot be provided, when the response support information has not received for a predetermined period after the response support request was received. In this case, server device 110 requests off-board management system 300 to provide response support (step S71). When off-board management system 300 receives the response support request, off-board management system 300 generates response support information and transmits the response support information to server device 110 (step S72).

When server device 110 obtains the response support information, server device 110 generates response information based on the response support information, and transmits the response information to first flight attendant terminal 131 that is the inquiry source (step S73). With this, first flight attendant terminal 131 obtains the response information and displays content such as the message, image, and the like indicated by the response information (step S48). In other words, a response is made to the inquiry made in step S41. Furthermore, steps S49 to S51 are performed in a similar manner to the example illustrated in FIG. 20.

FIG. 23 is a flowchart of an example of the processing performed by server device 110.

First, when processor 111 of server device 110 receives an inquiry, processor 111 determines whether the inquiry source is passenger terminal 120 or flight attendant terminal 130 (step S101). In other words, processor 111 determines whether the user of the inquiry source is a passenger or a flight attendant. When processor 111 determines that the inquiry source is passenger terminal 120 ("passenger" in step S101), processor 111 determines whether a response can be made to the inquiry made from passenger terminal 120 by using first response data 11 in first recorder 113a (step S102a). When processor 111 determines that a response can be made (Yes in step S102a), processor 111 generates response information by using first response data 11 (step S103a). Processor 111 then displays the response information on the display of passenger terminal 120 by transmitting the response information to passenger terminal 120 that is the inquiry source (step S104a). With this, a response is made to the inquiry from passenger terminal 120.

When processor 111 determines in step S101 that the inquiry source is flight attendant terminal 130 ("flight attendant" in step S101), processor 111 determines whether a response can be made to the inquiry made from flight attendant terminal 130 by using second response data 12 in second recorder 113b (step S102b). When processor 111 determines that a response can be made (Yes in step S102b), processor 111 generates response information by using second response data 12 (step S103b). Processor 111 then displays the response information on the display of flight attendant terminal 130 that is the inquiry source by transmitting the response information to flight attendant terminal 130 (step S104b). With this, a response is made to the inquiry made from flight attendant terminal 130.

On the other hand, when processor 111 determines that a response cannot be made to the inquiry in step S102a or S102b (No in step S102a or No in step S102b), processor 111 accesses second recording medium 200 to obtain aircraft-related information 210 (step S105). Processor 111 may obtain any one or more items of information included in aircraft-related information 210. Processor 111 then determines whether a response can be made by using obtained aircraft-related information 210 (Step S106). When processor 111 determines that a response can be made to the inquiry from passenger terminal 120 ("response can be made to passenger" in step S106), processor 111 performs the processes starting from step S103a. When processor 111 determines that a response can be made to the inquiry from flight attendant terminal 130 ("response can be made to flight attendant" in step S106), processor 111 performs the processes starting from step S103b.

When processor 111 determines that a response cannot be made to the inquiry even by using aircraft-related information 210 (No in step S106), processor 111 requests one or more flight attendant terminals 130 that are not the inquiry source to provide response support (step S107). Processor 111 then determines whether response support information has been obtained from at least one flight attendant terminal 130 in response to the request (step S108). When processor 111 determines that the response support information has not been obtained from any of flight attendant terminals 130 (No in step S108), processor 111 requests off-board management system 300 to provide response support (step S109). As a result, processor 111 obtains the response support information from off-board management system 300 (Step S110).

Next, when processor 111 determines that the response support information has been obtained in step S108 (Yes in step S108) or obtains the response support information in step S110, processor 111 generates response information based on the response support information. Processor 111 displays the response information on the display of the inquiry source by transmitting the response information to the inquiry source (step S111). With this, even when server device 110 alone cannot make a response to the inquiry from the inquiry source, a response can be made to the inquiry source by using aircraft-related information 210 or by obtaining the response support information.

Processor 111 then determines whether information of the inquiry and the response needs to be shared (step S112). For example, processor 111 may determine that the information needs to be shared for all the inquiries and responses, or for predetermined inquiries and responses. Alternatively, processor 111 may determine that information of the inquiry and the response needs to be shared when the response information is generated by using aircraft-related information 210 or the response support information by the processes in steps S105 to S110. Here, when processor 111 determines that the information needs to be shared (Yes in step S112), processor 111 transmits inquiry and response result information to flight attendant terminals 130 that are different from the inquiry source. With this, the content indicated by the inquiry and response result information is displayed on the displays of flight attendant terminals 130 (Step S113).

As described above, server device 110 according to the present embodiment makes a response to the inquiry by using the resources provided external to server device 110, even when server device 110 alone cannot make a response to the inquiry. Accordingly, it is possible to increase the likelihood that appropriate responses will be provided to the inquiries for various situations about aircraft 1. In addition, since the response support request is repeatedly made, it is possible to further increase the likelihood that appropriate responses will be provided.

Although server device 110 according to the present disclosure has been described based on the embodiment described above, the present disclosure is not limited to the embodiment. Various modifications to the embodiment that can be conceived by those skilled in the art without departing from the teachings of the present disclosure may also be included in the present disclosure.

In the embodiment described above, each structural element may be configured in the form of a dedicated hardware product or realized by executing a software program suitable for each structural element. Each of the structural elements may be realized by means of a program executing unit, such as a central processing unit (CPU) or a processor, reading and executing the software program recorded on a recording medium, such as a hard disk or a semiconductor memory. Here, the software that realizes server device 110 and the like according to the embodiment described above is a computer program that causes a computer to execute each step in the flowchart in FIG. 23.

The following cases are also included in the present disclosure.
(1) At least one device described above may specifically be a computer system including a microprocessor, a read only memory (ROM), a random access memory (RAM), a hard disk unit, a display unit, a keyboard, a mouse and the like. The RAM or the hard disk unit stores a computer program. The at least one device achieves its function by the microprocessor operating according to the computer program. Here, a computer program is formed of combinations of instruction codes indicating commands to a computer to achieve a predetermined function.
(2) Part or all of the structural elements included in the at least one device may be configured by a single system large scale integration (LSI). The system LSI is an ultra-multifunctional LSI manufactured by integrating a plurality of structural elements on a single chip, and specifically, is a computer system including a microprocessor, a ROM, a RAM and the like. A computer program is stored in the RAM. The system LSI achieves its function by the microprocessor operating according to the computer program.
(3) Part or all of the structural elements included in the at least one device may be configured with an integrated circuit (IC) card removable from the device, or a single module. The IC card or the module is a computer system including a microprocessor, a ROM, a RAM, and the like. The IC card or the module may include the above-mentioned ultra-multifunctional LSI. The IC card or the module achieves its function by the microprocessor operating according to the computer program. The IC card or the module may be tamper resistant.
(4) The present disclosure may be implemented by the method described above. Moreover, the method may be a computer program implemented by a computer or a digital signal configured from the computer program.

Moreover, the present disclosure may be a computer program or a digital signal recorded on a computer-readable recording medium, such as a flexible disk, a hard disk, a compact disc (CD)-ROM, a DVD, a DVD-ROM, a DVD-RAM, a BD (Blu-ray (registered trademark) Disc), and a semiconductor memory. Moreover, it may be the digital signal recorded on these recording media.

Moreover, the present disclosure may transmit the computer program or digital signal via an electronic communication line, a wireless or wired communication line, a network represented by the Internet, a data broadcast, and the like.

Moreover, the program or the digital signal may be recorded on a recording medium and transferred, or the program or the digital signal may be transferred via the network or the like to be implemented by another independent computer system.

### [Industrial Applicability]

The server device according to the present disclosure is applicable to, for example, an IFE system provided to an aircraft.

### [Reference Signs List]

- 1: aircraft
- 2: seat
- 11: first response data
- 12: second response data
- 13: service data
- 100: information processing system
- 110: server device
- 111: processor
- 112: inputter and outputter
- 113: first recording medium
- 113a: first recorder
- 113b: second recorder
- 113c: third recorder
- 120: passenger terminal (terminal device)
- 130: flight attendant terminal (terminal device)
- 131: first flight attendant terminal (terminal device)
- 132: second flight attendant terminal (terminal device)
- 200: second recording medium
- 210: aircraft-related information
- 211: aircraft information
- 212: flight information
- 213: stock information
- 214: lighting information
- 215: time information
- 300: off-board management system

## Claims

1. A server device provided in an aircraft, the server device comprising:
a processor; and
a first recording medium that is non-transitory and stores data,
wherein the processor:
receives an inquiry from a terminal device provided in the aircraft;
determines whether a response can be made to the inquiry by using the data recorded in the first recording medium;
accesses a resource provided external to the server device, when the processor determines that the response cannot be made; and
generates response information by using the resource and transmits the response information to the terminal device to make the response.

2. The server device according to claim 1,
wherein, in the aircraft, each of a plurality of terminal devices is used as the terminal device,
when the processor receives the inquiry from an inquiry source that is one of the plurality of terminal devices, the processor further determines whether the inquiry source is a passenger terminal or a flight attendant terminal,
the passenger terminal is one of the plurality of terminal devices that is used by a passenger of the aircraft,
the flight attendant terminal is one of the plurality of terminal devices that is used by a flight attendant of the aircraft, and
in determination of whether the response can be made, the processor:
determines, when the inquiry source is the passenger terminal, whether a response tailored to the passenger corresponding to the passenger terminal can be made, and
determines, when the inquiry source is the flight attendant terminal, whether a response tailored to the flight attendant corresponding to the flight attendant terminal can be made.

3. The server device according to claim 2,
wherein the first recording medium stores:
first response data for responding to the inquiry from the passenger terminal; and
second response data for responding to the inquiry from the flight attendant terminal, and
in determination of whether the response can be made, the processor:
determines, when the inquiry source is the passenger terminal, whether the response can be made by referring to the first response data as the data, and
determines, when the inquiry source is the flight attendant terminal, whether the response can be made by referring to the second response data as the data.

4. The server device according to claim 1,
wherein, in access to the resource, the processor accesses a second recording medium that is the resource provided external to the server device and in the aircraft, the second recording medium storing information related to the aircraft as aircraft-related information, and
in generation of the response information, the processor generates the response information by using the aircraft-related information stored in the second recording medium.

5. The server device according to claim 4,
wherein the aircraft-related information includes at least one of:
aircraft information indicating a status of the aircraft;
flight information indicating a flight plan and a flight status of the aircraft;
stock information indicating a total number or quantity of items loaded on the aircraft;
lighting information indicating a setting and a status of lighting of the aircraft; or
time information indicating an onboard service schedule of the aircraft.

6. The server device according to claim 1,
wherein, in the aircraft, each of a plurality of terminal devices is used as the terminal device, and
when the processor receives the inquiry from an inquiry source that is one of the plurality of terminal devices:
in access to the resource, the processor accesses the resource by requesting a flight attendant terminal different from the inquiry source to provide response support, the flight attendant terminal being one of the plurality of terminal devices that is used by a flight attendant of the aircraft; and
in generation of the response information, the processor generates the response information by using information from the flight attendant terminal that is treated as the resource.

7. The server device according to claim 1,
wherein, in access to the resource, the processor accesses the resource by requesting an off-board management system to provide response support for the response, the off-board management system being provided external to the aircraft, and
in generation of the response information, the processor generates the response information by using information from the off-board management system that is treated as the resource.

8. The server device according to claim 7,
wherein, in the aircraft, each of a plurality of terminal devices is used as the terminal device, and
in access to the resource, the processor requests the off-board management system to provide response support when the processor receives the inquiry from an inquiry source that is one of the plurality of terminal devices, and is unable to receive response support from a flight attendant terminal in response to a response support request made to the flight attendant terminal, the flight attendant terminal being one of the plurality of terminal devices that is used by a flight attendant of the aircraft and different from the inquiry source.

9. The server device according to claim 2,
wherein the processor further transmits the response information generated to the flight attendant terminal when the inquiry source is the passenger terminal.

10. The server device according to claim 2,
wherein, in determination of the inquiry source, the processor identifies an attribute of the inquiry source, and determines, based on the attribute identified, whether the inquiry source is the passenger terminal or the flight attendant terminal.

11. The server device according to claim 2,
wherein, in generation of the response information, the processor, when the inquiry source is the passenger terminal, identifies an attribute of a passenger corresponding to the inquiry source, and generates the response information according to the attribute identified.

12. The server device according to claim 11,
wherein the attribute is at least one of a class, a seat number, and a seat area of a seat of the passenger.

13. An information processing method performed by a server device provided in an aircraft, the information processing method comprising:
receiving an inquiry from a terminal device provided in the aircraft;
determining whether a response can be made to the inquiry by using data recorded in a first recording medium;
accessing a resource provided external to the server device when determining that the response cannot be made; and
generating response information by using the resource, and transmitting the response information to the terminal device to make the response.

14. A program for a server device provided in an aircraft, the program causing a computer of the server device to execute:
receiving an inquiry from a terminal device provided in the aircraft;
determining whether a response can be made to the inquiry by using data recorded in a first recording medium;
accessing a resource provided external to the server device when determining that the response cannot be made; and
generating response information by using the resource, and transmitting the response information to the terminal device to make the response.
